(19) **Europäisches Patentamt European Patent Office Office européen des brevets**

(11) **EP 4 654 138 A1**

(12) **EUROPEAN PATENT APPLICATION**
published in accordance with Art. 153(4) EPC

(43) Date of publication:
26.11.2025 Bulletin 2025/48

(21) Application number: 24842038.2

(22) Date of filing: 16.05.2024

(51) International Patent Classification (IPC):
*G06T 15/00* (2011.01)

(52) Cooperative Patent Classification (CPC):
Y02B 20/40

(86) International application number:
**PCT/CN2024/093754**

(87) International publication number:
**WO 2025/016038 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 18.07.2023 CN 202310880269

(71) Applicant: Tencent Technology (Shenzhen) Company Limited
Shenzhen, Guangdong 518057 (CN)

(72) Inventors:
• PAN, Xiaoyu
  Shenzhen, Guangdong 518057 (CN)
• LI, Yuanheng
  Shenzhen, Guangdong 518057 (CN)
• WU, Yu
  Shenzhen, Guangdong 518057 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **ILLUMINATION RENDERING METHOD AND APPARATUS, AND DEVICE, MEDIUM AND COMPUTER PROGRAM PRODUCT**

(57) Disclosed is an image rendering method. The method is performed by a computer device and includes: determining, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path (202); determining a neighborhood pixel point of the pixel point, determining a plurality of second lighting paths acquired through lighting path sampling on the neighborhood pixel point, and selecting a second candidate lighting path from the plurality of second lighting paths, such that a probability of the second candidate lighting path being selected is positively correlated with a corresponding lighting contribution value of the second lighting path (204); selecting a target lighting path from the first candidate lighting path and the second candidate lighting path (206); determining a related lighting path of the pixel point, and determining, according to the lighting contribution value of the target lighting path, a lighting contribution that the related lighting path provides to the pixel point, to acquire a lighting contribution value of the pixel point; the related lighting path comprising the first lighting path and the second lighting path (208); and performing image rendering on the pixel point in the virtual scene by using the lighting contribution value of the pixel point in the virtual scene (210).

FIG. 2

## Description

### RELATED APPLICATION

This application claims the priority to Chinese Patent Application No. 2023108802692 filed on July 18, 2023 and entitled "Method and Apparatus for Lighting Rendering, Device, and Medium", which is incorporated herein in its entirety by reference.

### FIELD OF THE TECHNOLOGY

This application relates to the rendering technology, and in particular, to a method and apparatus for lighting rendering, a device, a medium, and a computer program product.

### BACKGROUND OF THE DISCLOSURE

Numerous virtual light sources exist in a virtual scene. These virtual light sources can provide lighting contribution values for pixel points in the virtual scene directly or indirectly. The lighting contribution values are used for lighting rendering on the virtual scene, through which a virtual scene with lighting effects is acquired. For example, in a game scene, if a virtual table lamp is arranged in a virtual room, the virtual table lamp can light the entire virtual room after turned on. For lighting rendering on the virtual scene, it is necessary to acquire the lighting contribution values corresponding to the pixel points in the virtual scene through lighting path sampling at first, and then the lighting rendering is performed on the virtual scene based on the lighting contribution values corresponding to the pixel points.

In the conventional technology, lighting paths are usually acquired through uniform sampling on paths of the pixel points. Lighting contribution values provided by the sampled lighting paths are integrated directly for lighting rendering on the virtual scene. With the uniform sampling, light rays are emitted in various directions of the pixel points at the same probability, Hence, a mass of lighting paths often need to be sampled for convergence for each pixel point. As a result, poor rendering quality will be caused if the number of sampled lighting paths is small.

### SUMMARY

This application provides a method and apparatus for lighting rendering, a device, a medium, and a computer program product.

In a first aspect, this application provides an image rendering method. The method is performed by a computer device and includes:

determining, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path;

determining a neighborhood pixel point of the pixel point, determining a plurality of second lighting paths acquired through lighting path sampling on the neighborhood pixel point, and selecting a second candidate lighting path from the plurality of second lighting paths, such that a probability of the second candidate lighting path being selected is positively correlated with a corresponding lighting contribution value of the second lighting path;

selecting a target lighting path from the first candidate lighting path and the second candidate lighting path;

determining a related lighting path of the pixel point, and determining, according to the lighting contribution value of the target lighting path, a lighting contribution that the related lighting path provides to the pixel point, to acquire a lighting contribution value of the pixel point; the related lighting path comprising the first lighting path and the second lighting path; and

performing the lighting rendering on each pixel point in the virtual scene by using the comprehensive lighting contribution value of each pixel point in the virtual scene.

In a second aspect, this application provides an apparatus for image rendering. The apparatus includes:

a selection module configured to determine, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path; determine a neighborhood pixel point of the pixel point, determining a plurality of second lighting paths acquired through lighting path sampling on the neighborhood pixel point, and selecting a second candidate lighting path from the plurality of second lighting paths, such that a probability of the second candidate lighting path being selected is positively correlated with a corresponding lighting contribution value of the second lighting path; and select a target lighting path from the first candidate lighting path and the second candidate lighting path; and

a rendering module configured to determine a related lighting path of the pixel point, and determine, according to the lighting contribution value of the target lighting path, a lighting contribution that the related lighting path provides to the pixel point, to acquire a lighting contribution value of the pixel point; the related lighting path comprising the first lighting path and the second lighting path; and perform image rendering on the pixel point in the virtual scene by using the lighting contribution value of the pixel point in the virtual scene.

In a third aspect, this application provides a computer device. The computer device includes a memory and a processor, the memory having a computer program stored therein, and the processor, when executing the computer program, implementing operations in method embodiments of this application.

In a fourth aspect, this application provides a computer-readable storage medium. The computer-readable storage medium has a computer program stored therein, the computer program, when executed by a processor, implementing operations in method embodiments of this application.

In a fifth aspect, this application provides a computer program product. The computer program product includes a computer program, the computer program, when executed by a processor, implementing operations in method embodiments of this application.

Details of one or more embodiments of this application are set forth in the following accompanying drawings and descriptions. Other features, objectives, and advantages of this application will become apparent from the description, the accompanying drawings, and the claims.

BRIEF DESCRIPTION OF THE DRAWINGS

To describe the technical solutions in the embodiments of this application or in the conventional technology more clearly, the accompanying drawings required in descriptions of the embodiments or the conventional technology will be briefly described hereinafter. Apparently, the accompanying drawings in the following descriptions show merely embodiments of this application, and those of ordinary skill in the art can still derive other accompanying drawings from these accompanying drawings without creative efforts.

FIG. 1 is an application environment diagram of a method for lighting rendering in an embodiment;

FIG. 2 is a schematic flowchart of a method for lighting rendering in an embodiment;

FIG. 3 is a schematic diagram of a data structure of a path reservoir in an embodiment;

FIG. 4 is a schematic diagram of a shared lighting path between pixel points in an embodiment;

FIG. 5 is a schematic diagram of a rendering effect of temporal accumulation and spatial reuse of a path reservoir in an embodiment;

FIG. 6 is a schematic diagram of a parameter configuration interface in an embodiment;

FIG. 7 is a schematic diagram of effect comparison between a conventional method for lighting rendering and a method for lighting rendering of this application in an embodiment;

FIG. 8 is a schematic diagram of rendering effect comparison between a conventional method for lighting rendering and a method for lighting rendering of this application under a desirable lighting condition in an embodiment;

FIG. 9 is a schematic diagram of rendering effect comparison between a conventional method for lighting rendering and a method for lighting rendering of this application under a poor lighting condition in an embodiment;

FIG. 10 is a schematic flowchart of a method for lighting rendering in another embodiment;

FIG. 11 is a structural block diagram of an apparatus for lighting rendering in an embodiment;

FIG. 12 is an internal structural diagram of a computer device in an embodiment; and

FIG. 13 is an internal structural diagram of a computer device in another embodiment.

DESCRIPTION OF EMBODIMENTS

Technical solutions of embodiments of this application will be described clearly and completely below in conjunction with accompanying drawings of the embodiments of this application. Apparently, the embodiments described are merely some embodiments rather than all embodiments of this application. All other embodiments derived by a person of ordinary skill in the art from the embodiments of this application without creative efforts are to fall within the protection scope of this application.

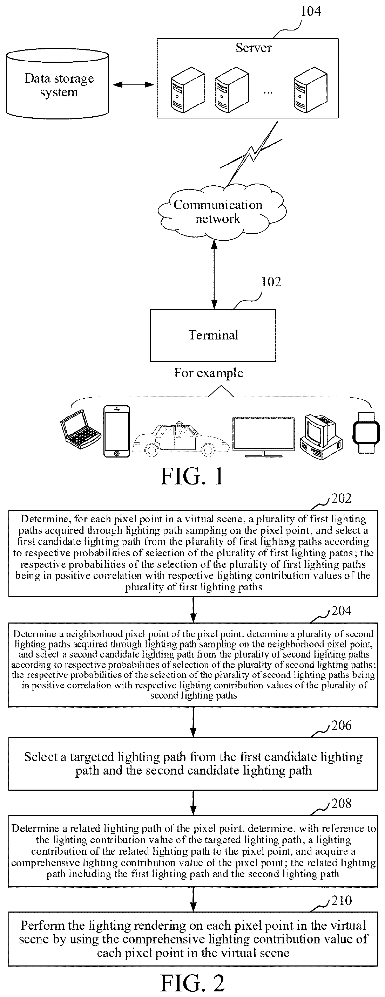

A method for lighting rendering according to this application may be applied to an application environment shown in FIG. 1. A terminal 102 communicates with a server 104 through a network. A data storage system may be separately set, and may store data to be processed by the server 104. The data storage system may be integrated into the server 104, or may be placed on the cloud or other servers. The terminal 102 may be, but is not limited to, various desktop computers, notebook computers, smart phones, tablet personal computers, Internet of Things devices, and portable wearable devices. The Internet of Things device may be a smart speaker, a smart television, a smart air conditioner, a smart in-vehicle device, etc. The portable wearable device may be a smart watch, a smart band, a headset device, etc. The server 104 may be an independent physical server, a server cluster or a distributed system composed of a plurality of physical servers, or a cloud server that provides a network security service such as a cloud service, a cloud database, cloud computation, a cloud function, cloud storage, a network service, cloud communication, a middleware service, a domain name service, cloud security, and host security, a content delivery network (CDN), and a basic cloud computation service such as big data, and an artificial intelligence platform. The terminal 102 and the server 104 may be directly or indirectly connected to each other through wired or wireless communication, which is not limited herein in this application.

The terminal 102 determines, for each pixel point in a virtual scene, a plurality of first lighting paths acquired through lighting path sampling on the pixel point, and selects a first candidate lighting path from the plurality of first lighting paths according to respective probabilities of selection of the plurality of first lighting paths. The respective probabilities of the selection of the plurality of first lighting paths are positively correlated with respective lighting contribution values of the plurality of first lighting paths. The terminal 102 determines a neighborhood pixel point of the pixel point, determines a plurality of second lighting paths acquired through lighting path sampling on the neighborhood pixel point, and selects a second candidate lighting path from the plurality of second lighting paths according to respective probabilities of selection of the plurality of second lighting paths. The respective probabilities of the selection of the plurality of second lighting paths are positively correlated with respective lighting contribution values of the plurality of second lighting paths. The terminal selects a targeted lighting path from the first candidate lighting path and the second candidate lighting path according to the respective probabilities of the selection of the first candidate lighting path and the second candidate lighting path. The terminal determines a related lighting path of the pixel point, determines, with reference to the lighting contribution value of the targeted lighting path, a lighting contribution of the related lighting path to the pixel point, and acquires a comprehensive lighting contribution value of the pixel point. The related lighting path includes the first lighting path and the second lighting path. The terminal performs the lighting rendering on each pixel point in the virtual scene by using the comprehensive lighting contribution value of each pixel point in the virtual scene.

After acquiring the corresponding comprehensive lighting contribution value of the pixel point, the terminal 102 may perform the lighting rendering on the pixel point based on the comprehensive lighting contribution value. After acquiring the corresponding comprehensive lighting contribution value of the pixel point, the terminal 102 may transmit the corresponding comprehensive lighting contribution value of the pixel point to the server 104 for being stored, which is not limited in this embodiment. An application scene in FIG. 1 is exemplarily descriptive merely and is not limited to thereto.

In an embodiment, as shown in FIG. 2, a method for lighting rendering (namely, an image rendering method) is provided. The method may be applied to a computer device. The computer device may be a terminal or a server. The method may be performed by the terminal or the server separately, or may be implemented through interaction between the terminal and the server. This embodiment is described with application of this method to the computer device as an example. The method includes the following operations:

Operation 202: Determine, for each pixel point in a virtual scene, a plurality of first lighting paths acquired through lighting path sampling on the pixel point, and select a first candidate lighting path from the plurality of first lighting paths according to respective probabilities of selection of the plurality of first lighting paths; the respective probabilities of the selection of the plurality of first lighting paths being positively correlated with respective lighting contribution values of the plurality of first lighting paths. In embodiments of the present application, operation 202 can be considered as following operations: determine, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path.

The first lighting path is the lighting path acquired through the lighting path sampling on the pixel point. The lighting path sampling refers to technology of acquiring a path of a light ray by monitoring the light ray interacting with a surface of a virtual object in the virtual scene (e.g., reflection, refraction, and other propagation behaviors of light ray on a virtual surface). The first candidate lighting path is the lighting path selected from the plurality of first lighting paths acquired through the lighting path sampling on the pixel point. The probability of the selection as the first candidate lighting path of the first lighting path is positively correlated with the lighting contribution value of the first lighting path. For each first lighting path, the greater a lighting contribution of the first lighting path to the pixel point is, namely, the higher importance of the first lighting path to the pixel point is, the higher the probability of the selection as the first candidate lighting path of the first lighting path is. The smaller a lighting contribution of the first lighting path to the pixel point is, namely, the lower importance of the first lighting path to the pixel point is, the lower the probability of the selection as the first candidate lighting path of the first lighting path is. The lighting contribution value refers to the lighting data contributed by the lighting path to the pixel point. The lighting contribution value may be a color value of the pixel point, such as a red, green, and blue (RGB) color value (namely, the color value formed by three primary colors of red, green and blue). For example, white is expressed by RGB (255, 255, 255).

In an embodiment, the virtual scene includes at least one virtual object, and each virtual object is composed of a plurality of pixel points. For each pixel point in the virtual scene, the computer device may take the pixel point as a start point for the lighting path sampling, emit ray lights by randomly selecting a plurality of directions, and continuously bounce the ray lights in the virtual scene to acquire the plurality of first lighting paths of the pixel point. After acquiring the plurality of first lighting paths of the pixel point, the computer device may select the first candidate lighting path of the pixel point from the plurality of first lighting paths of the pixel point according to the lighting contribution values of the first lighting paths. The respective probabilities of the selection of the plurality of first lighting paths are positively correlated with the respective lighting contribution values of the plurality of first lighting paths.

In an embodiment, for each first lighting path of the pixel point, the computer device may determine a path importance parameter of the first lighting path according to the lighting contribution value of the first lighting path. Further, the computer device may acquire a selected random number selected for the first lighting path, and select the first candidate lighting path from the plurality of first lighting paths of the pixel point according to the selected random number selected for the first lighting path and the path importance parameters of the first lighting paths. The path importance parameter is positively correlated with the lighting contribution value. In this way, with reference to the selected random number selected for the first lighting path, the plurality of first lighting paths acquired through the lighting path sampling on the pixel point are determined, and the first candidate lighting path is selected from the plurality of first lighting paths according to the respective probabilities of the selection of the plurality of first lighting paths. Thus, diversity of the candidate lighting paths correspondingly selected for the pixel points in the virtual scene can be guaranteed when the lighting rendering is performed on the pixel points in the virtual scene, and rendering quality of the virtual scene can be further improved.

In an embodiment, the greater the path importance parameter is, the larger a value range mapped by the path importance parameter is. The computer device may acquire the selected random number selected for the first lighting path. If the selected random number selected for the first lighting path is tossed to the value range mapped by the path importance parameter, a probability that the selected random number falls within a larger value range is higher. The computer device may take, as the selected first candidate lighting path, the first lighting path corresponding to the path importance parameter mapped by the value range in which the selected random number falls.

In an embodiment, for each first lighting path of the pixel point, the computer device may convert a color intensity value in the lighting contribution value of the first lighting path into a color brightness value corresponding to the first lighting path. Then, the computer device may determine the path importance parameter of the first lighting path according to the color brightness value corresponding to the first lighting path. For example, the computer device may directly take the color brightness value corresponding to the first lighting path as the path importance parameter of the first lighting path. For example, the computer device may also weigh the color brightness value corresponding to the first lighting path to acquire the path importance parameter of the first lighting path. The color intensity value is configured for representing an intensity of the color in the lighting contribution value. For example, if the lighting contribution value of the first lighting path is expressed as RGB (255, 255, 255), the color intensity value includes three numerical values of 255, 255, and 255. The color brightness value is configured for representing the brightness of the color provided by the first lighting path for the pixel point.

In an embodiment, the computer device may weigh the color intensity value in the lighting contribution value of the first lighting path to acquire the color brightness value corresponding to the first lighting path. For example, the three numerical values of 255, 255 and 255 are weighted to acquire the color brightness value corresponding to the first lighting path.

In an embodiment, for each pixel point in the virtual scene, the computer device may select a first lighting path having a greatest lighting contribution from the plurality of first lighting paths of the pixel point as the first candidate lighting path of the pixel point.

Operation 204: Determine a neighborhood pixel point of the pixel point, determine a plurality of second lighting paths acquired through lighting path sampling on the neighborhood pixel point, and select a second candidate lighting path from the plurality of second lighting paths according to respective probabilities of selection of the plurality of second lighting paths; the respective probabilities of the selection of the plurality of second lighting paths being positively correlated with respective lighting contribution values of the plurality of second lighting paths. In embodiments of the present application, operation 204 can be considered as following operations: determine a neighborhood pixel point of the pixel point, determine a plurality of second lighting paths acquired through lighting path sampling on the neighborhood pixel point, and select a second candidate lighting path from the plurality of second lighting paths, such that a probability of the second candidate lighting path being selected is positively correlated with a corresponding lighting contribution value of the second lighting path.

For each pixel point in the virtual scene, the neighborhood pixel point of the pixel point is a pixel point adjacent to the pixel point positionally in the virtual scene. The second lighting path is the lighting path acquired through the lighting path sampling on the neighborhood pixel point. The second candidate lighting path is the lighting path selected from the plurality of second lighting paths acquired through the lighting path sampling on the neighborhood pixel point. The probability of the selection as the second candidate lighting path of the second lighting path is positively correlated with the lighting contribution value of the second lighting path. For each second lighting path, the greater a lighting contribution of the second lighting path to the neighborhood pixel point is, namely, the higher importance of the second lighting path to the neighborhood pixel point is, the higher the probability of the selection as the second candidate lighting path of the second lighting path is. The smaller a lighting contribution of the second lighting path to the neighborhood pixel point is, namely, the lower importance of the second lighting path to the neighborhood pixel point is, the lower the probability of the selection as the second candidate lighting path of the second lighting path is.

Specifically, for each pixel point in the virtual scene, a number of neighborhood pixel points of the pixel point may be at least one. For each neighborhood pixel point of the pixel point in the virtual scene, the computer device may take the neighborhood pixel point as a start point for the lighting path sampling, emit ray lights by randomly selecting a plurality of directions, and continuously bounce the ray lights in the virtual scene to acquire the plurality of second lighting paths of the neighborhood pixel point. After acquiring the plurality of second lighting paths of the neighborhood pixel point, the computer device may select the second candidate lighting path of the neighborhood pixel point from the plurality of second lighting paths of the neighborhood pixel point according to the lighting contribution values of the second lighting paths. The respective probabilities of the selection of the plurality of second lighting paths are positively correlated with respective lighting contribution values of the plurality of second lighting paths.

In an embodiment, for each second lighting path of the neighborhood pixel point, the computer device may determine a path importance parameter of the second lighting path according to the lighting contribution value of the second lighting path. Further, the computer device may acquire a selected random number selected for the second lighting path, and select the second candidate lighting path from the plurality of second lighting paths of the neighborhood pixel point according to the selected random number selected for the second lighting path and the path importance parameters of the second lighting paths. The path importance parameter is positively correlated with the lighting contribution value. In this way, with reference to the selected random number selected for the second lighting path, the second candidate lighting path is selected from the plurality of second lighting paths of the neighborhood pixel point. Thus, diversity of the candidate lighting paths correspondingly selected for the neighborhood pixel points of the pixel point can be guaranteed when the lighting rendering is performed on the pixel points in the virtual scene, and rendering quality of the virtual scene can be further improved.

In an embodiment, the greater the path importance parameter is, the larger a value range mapped by the path importance parameter is. The computer device may acquire the selected random number selected for the second lighting path. If the selected random number selected for the second lighting path is tossed to the value range mapped by the path importance parameter, a probability that the selected random number falls within a larger value range is higher. The computer device may take, as the selected second candidate lighting path, the second lighting path corresponding to the path importance parameter mapped by the value range in which the selected random number falls.

In an embodiment, for each second lighting path of the neighborhood pixel point, the computer device may convert a color intensity value in the lighting contribution value of the second lighting path into a color brightness value corresponding to the second lighting path. Then, the computer device may determine the path importance parameter of the second lighting path according to the color brightness value corresponding to the second lighting path. For example, the computer device may directly take the color brightness value corresponding to the second lighting path as the path importance parameter of the second lighting path. For example, the computer device may also weigh the color brightness value corresponding to the second lighting path to acquire the path importance parameter of the second lighting path. The color intensity value is configured for representing an intensity of the color in the lighting contribution value.

In an embodiment, the computer device may weigh the color intensity value in the lighting contribution value of the second lighting path to acquire the color brightness value corresponding to the second lighting path. For example, if the lighting contribution value of the second lighting path is expressed as RGB (255, 255, 255), the color intensity value includes three numerical values of 255, 255, and 255. The computer device may weigh the three numerical values of 255, 255 and 255 to acquire the color brightness value corresponding to the second lighting path.

In an embodiment, for each neighborhood pixel point of the pixel point in the virtual scene, the computer device may select a second lighting path having a greatest lighting contribution from the plurality of second lighting paths of the neighborhood pixel point as the second candidate lighting path of the neighborhood pixel point.

Operation 206: Select a target lighting path from the first candidate lighting path and the second candidate lighting path.

Specifically, for each pixel point in the virtual scene, the computer device may select the target lighting path of the pixel point from the first candidate lighting path of the pixel point and the second candidate lighting paths corresponding to the neighborhood pixel points of the pixel point respectively.

In an embodiment, for each pixel point in the virtual scene, the first candidate lighting path and the second candidate lighting paths of the pixel point may make up a candidate path set corresponding to the pixel point. The computer device may randomly select one candidate lighting path from the candidate path set corresponding to the pixel point as the target lighting path of the pixel point. The probabilities of the selection as the target lighting path of the candidate lighting paths from the candidate path set are identical.

Operation 208: Determine a related lighting path of the pixel point, and determine, according to the lighting contribution value of the target lighting path, a lighting contribution taht the related lighting path provides to the pixel point, to acquire a comprehensive lighting contribution value of the pixel point; the related lighting path including the first lighting path and the second lighting path.

Specifically, for each pixel point in the virtual scene, the first lighting path and the second lighting path of the pixel point may make up the related lighting paths of the pixel point. The computer device may determine, with reference to the lighting contribution value provided for the pixel point by the target lighting path of the pixel point, the lighting contribution provided for the pixel point by the related lighting path of the pixel point and acquire the comprehensive lighting contribution value finally received by the pixel point.

In an embodiment, the computer device may convert a color intensity value in the lighting contribution value of the target lighting path into a color brightness value corresponding to the target lighting path, and determine a path importance parameter of the target lighting path according to the color brightness value corresponding to the target lighting path. The path importance parameter of the target lighting path is configured for representing an intensity of a color in the lighting contribution value of the target lighting path. Then, the computer device may eliminate the color intensity value from the lighting contribution value of the target lighting path based on the path importance parameter of the target lighting path, and acquire a color type value of the target lighting path. For each related lighting path of the pixel point, the computer device may convert a color intensity value in the lighting contribution value of the related lighting path into a color brightness value corresponding to the related lighting path, and determine a path importance parameter of the related lighting path according to the color brightness value corresponding to the related lighting path. Then, the computer device may select a greatest path importance parameter from the path importance parameters of the related lighting paths of the pixel point, assign the color type value of the target lighting path to the selected greatest path importance parameter, and acquire the comprehensive lighting contribution value finally received by the pixel point.

In an embodiment, the computer device may convert the color intensity value in the lighting contribution value of the target lighting path into a color saturation value corresponding to the target lighting path, and determine the path importance parameter of the target lighting path according to the color saturation value corresponding to the target lighting path. The path importance parameter of the target lighting path is configured for representing an intensity of a color in the lighting contribution value of the target lighting path. Then, the computer device may eliminate the color intensity value from the lighting contribution value of the target lighting path based on the path importance parameter of the target lighting path, and acquire the color type value of the target lighting path. For each related lighting path of the pixel point, the computer device may convert the color intensity value in the lighting contribution value of the related lighting path into a color saturation value corresponding to the related lighting path, and determine the path importance parameter of the related lighting path according to the color saturation value corresponding to the related lighting path. Then, the computer device may select a greatest path importance parameter from the path importance parameters of the related lighting paths of the pixel point, assign the color type value of the target lighting path to the selected greatest path importance parameter, and acquire the comprehensive lighting contribution value finally received by the pixel point.

In an embodiment, the computer device may convert the color intensity value in the lighting contribution value of the target lighting path into a color chroma value corresponding to the target lighting path, and determine the path importance parameter of the target lighting path according to the color chroma value corresponding to the target lighting path. The path importance parameter of the target lighting path is configured for representing an intensity of a color in the lighting contribution value of the target lighting path. Then, the computer device may eliminate the color intensity value from the lighting contribution value of the target lighting path based on the path importance parameter of the target lighting path, and acquire the color type value of the target lighting path. For each related lighting path of the pixel point, the computer device may convert the color intensity value in the lighting contribution value of the related lighting path into a color chroma value corresponding to the related lighting path, and determine the path importance parameter of the related lighting path according to the color chroma value corresponding to the related lighting path. Then, the computer device may select a greatest path importance parameter from the path importance parameters of the related lighting paths of the pixel point, assign the color type value of the target lighting path to the selected greatest path importance parameter, and acquire the comprehensive lighting contribution value finally received by the pixel point.

Operation 210: Perform the lighting rendering on each pixel point in the virtual scene by using the comprehensive lighting contribution value of each pixel point in the virtual scene. In embodiments of the present application, operation 210 can be considered as following operations: perform image rendering on the pixel point in the virtual scene by using the lighting contribution value of the pixel point in the virtual scene

The computer device may perform the lighting rendering (namely, image rendering) on the pixel point according to the comprehensive lighting contribution value finally received by the pixel point. The lighting rendering on the pixel point may be understood in a way that before the lighting rendering, the comprehensive lighting contribution value is not recorded in the pixel point in the virtual scene, and the lighting rendering on the pixel point is to record the comprehensive lighting contribution value of the pixel point in the pixel point, so as to cause the pixel point to present a lighting effect. For example, the lighting contribution value of the pixel point may be RGB (255, 255, 255), and the pixel point may present white after the lighting rendering is performed on the pixel point.

In an embodiment, the computer device may pre-bake a lighting map corresponding to the virtual scene according to the comprehensive lighting contribution values of the pixel points in the virtual scene. The lighting map is configured for recording the comprehensive lighting contribution values of the pixel points in the virtual scene. Then, when receiving a rendering instruction, the computer device may perform the lighting rendering on the pixel points in the virtual scene according to the comprehensive lighting contribution values of the pixel points recorded in the pre-baked lighting map. In this way, rendering efficiency of the virtual scene can be improved.

In the method for lighting rendering, for each pixel point in the virtual scene, the plurality of first lighting paths acquired through lighting path sampling on the pixel point are determined, and the first candidate lighting path is selected from the plurality of first lighting paths according to the respective probabilities of the selection of the plurality of first lighting paths. The respective probabilities of the selection of the plurality of first lighting paths are positively correlated with the respective lighting contribution values of the plurality of first lighting paths. The greater the lighting contribution of the first lighting path to the pixel point is, the higher importance of the first lighting path to the pixel point is, and the higher the probability of the selection of the first lighting path is. The neighborhood pixel point of the pixel point is determined, the plurality of second lighting paths acquired through lighting path sampling on the neighborhood pixel point are determined, and the second candidate lighting path is selected from the plurality of second lighting paths according to respective probabilities of selection of the plurality of second lighting paths. The respective probabilities of the selection of the plurality of second lighting paths are positively correlated with the respective lighting contribution values of the plurality of second lighting paths The greater the lighting contribution of the second lighting path to the neighborhood pixel point is, the higher importance of the second lighting path to the neighborhood pixel point is, and the higher the probability of the selection of the second lighting path is. The target lighting path is selected from the first candidate lighting path and the second candidate lighting path. The related lighting path of the pixel point is determined, the lighting contribution of the related lighting path to the pixel point is determined with reference to the lighting contribution value of the target lighting path, and the comprehensive lighting contribution value of the pixel point is acquired. The lighting rendering is performed on each pixel point in the virtual scene by using the comprehensive lighting contribution value of each pixel point in the virtual scene. Compared with a conventional method for lighting rendering on a virtual scene by integrating lighting contribution values provided by lighting paths acquired through uniform sampling on a pixel point, since the related lighting path includes the first lighting path and the second lighting path, this application computes the comprehensive lighting contribution value provided for the pixel point by the related lighting paths corresponding to the pixel point and the neighborhood pixel point of the pixel point, for the lighting rendering on the pixel point. In this way, rendering quality can be improved in the case of a small number of lighting paths sampled on the pixel point.

In an embodiment, the operations of determining, for each pixel point in a virtual scene, a plurality of first lighting paths acquired through lighting path sampling on the pixel point, and selecting a first candidate lighting path from the plurality of first lighting paths according to respective probabilities of selection of the plurality of first lighting paths (namely, determining, for a pixel point in a virtual scene, a plurality of first lighting paths acquired through lighting path sampling on the pixel point, and selecting a first candidate lighting path from the plurality of first lighting paths) include: perform, for the pixel point in the virtual scene, a current round of path sampling on the pixel point, and acquire a first lighting path sampled in the current round; select a new first lighting path from the first lighting path sampled in the current round and a first lighting path selected in a last round (according to respective probabilities of selection of the first lighting path sampled in the current round and the first lighting path selected in the last round, and take the new first lighting path as a first lighting path selected in the current round); and take a next round as a new current round, return to the operations of performing a current round of path sampling on the pixel point, and acquiring a first lighting path sampled in the current round and continuously perform the operations until a first sampling stop condition is satisfied, and take a first lighting path selected in a final round as the first candidate lighting path.

Specifically, for each pixel point in the virtual scene, the computer device may perform the current round of path sampling on the pixel point, and acquire the first lighting path sampled in the current round. The computer device may acquire the first lighting path selected after the last round of sampling before the current round of sampling, select the new first lighting path from the first lighting path sampled in the current round and the first lighting path selected in the last round according to the respective probabilities of the selection of the first lighting path sampled in the current round and the first lighting path selected in the last round, and take the new first lighting path as the first lighting path selected in the current round. Then, the computer device may take the next round of sampling after the current round of sampling as the new current round of sampling, return to the operations that for each pixel point in the virtual scene, the computer device may perform the current round of path sampling on the pixel point, and acquire the first lighting path sampled in the current round and continuously perform the operations until the first sampling stop condition is satisfied, and take the first lighting path selected in the final round as the first candidate lighting path of the pixel point.

In an embodiment, the first sampling stop condition may be either of a condition that a number of times of the lighting path sampling on the pixel point reaches a preset number of times of sampling on the pixel point, and a condition that a number of iterative sampling reaches the preset number of sampling on the pixel point.

In an embodiment, the computer device may select a lighting path having the greatest lighting contribution from the first lighting path sampled in the current round and the first lighting path selected in the last round as the new first lighting path, and take the new first lighting path as the first lighting path selected in the current round.

In the embodiment described above, through iterative sampling of the first lighting path on the pixel point, after each round of sampling, the new first lighting path is selected from the first lighting path sampled in the current round and the first lighting path selected in the last round according to the respective probabilities of the selection of the first lighting path sampled in the current round and the first lighting path selected in the last round. The new first lighting path is taken as the first lighting path selected in the current round. The first lighting path selected in the final round is taken as the first candidate lighting path. Since an important path is selected once in each round, the first lighting path selected in the last round participating in the current round of selection is guaranteed of high importance, an accuracy rate of the first candidate lighting path finally selected of the pixel point can be improved. Thus, the lighting rendering quality can be further improved.

In an embodiment, the operation of selecting a new first lighting path from the first lighting path sampled in the current round and a first lighting path selected in a last round according to respective probabilities of selection of the first lighting path sampled in the current round and the first lighting path selected in the last round (namely, selecting a new first lighting path from the first lighting path sampled in the current round and a first lighting path selected in a last round) includes: determine a path importance parameter of the first lighting path sampled in the current round according to the lighting contribution value of the first lighting path sampled in the current round; determine a path importance parameter of the first lighting path selected in the last round according to the lighting contribution value of the first lighting path selected in the last round; acquire a first selected random number corresponding to the current round; determine a value range to which the first selected random number belongs according to a value range mapped by the path importance parameter of the first lighting path sampled in the current round and a value range mapped by the path importance parameter of the first lighting path selected in the last round, and select the new first lighting path from the first lighting path sampled in the current round and the first lighting path selected in the last round according to the value range to which the first selected random number belongs; the path importance parameter is positively correlated with a size of the value range mapped.

In an embodiment, the computer device may determine the path importance parameter of the first lighting path sampled in the current round according to the lighting contribution value of the first lighting path sampled in the current round, and determine the path importance parameter of the first lighting path selected in the last round according to the lighting contribution value of the first lighting path selected in the last round. Then, the computer device may acquire the first selected random number corresponding to the current round, determine the value range to which the first selected random number belongs according to the value range mapped by the path importance parameter of the first lighting path sampled in the current round and the value range mapped by the path importance parameter of the first lighting path selected in the last round, and select the new first lighting path from the first lighting path sampled in the current round and the first lighting path selected in the last round according to the value range to which the first selected random number belongs. The probability of the selection of the first lighting path is positively correlated with the path importance parameter of the first lighting path. The path importance parameter is positively correlated with the size of the value range mapped. The greater the path importance parameter is, the larger the value range mapped by the path importance parameter is. If the first selected random number is tossed to the value range mapped by the path importance parameter, a probability that the first selected random number falls within a larger value range is higher. The computer device may take, as the selected first candidate lighting path, the first lighting path corresponding to the path importance parameter mapped by the value range in which the first selected random number falls.

In an embodiment, the computer device may convert a color intensity value in the lighting contribution value of the first lighting path sampled in the current round into a color brightness value corresponding to the first lighting path sampled in the current round. Then, the computer device may determine the path importance parameter of the first lighting path sampled in the current round according to the color brightness value corresponding to the first lighting path sampled in the current round. For example, the computer device may directly take the color brightness value corresponding to the first lighting path sampled in the current round as the path importance parameter of the first lighting path sampled in the current round. For example, the computer device may also weigh the color brightness value corresponding to the first lighting path sampled in the current round to acquire the path importance parameter of the first lighting path sampled in the current round.

In an embodiment, the computer device may convert a color intensity value in the lighting contribution value of the first lighting path selected in the last round into a color brightness value corresponding to the first lighting path selected in the last round. Then, the computer device may determine the path importance parameter of the first lighting path selected in the last round according to the color brightness value corresponding to the first lighting path selected in the last round. For example, the computer device may directly take the color brightness value corresponding to the first lighting path selected in the last round as the path importance parameter of the first lighting path selected in the last round. For example, the computer device may also weigh the color brightness value corresponding to the first lighting path selected in the last round to acquire the path importance parameter of the first lighting path selected in the last round.

In the embodiment described above, in each round of selection, the new first lighting path is selected from the first lighting path sampled in the current round and the first lighting path selected in the last round based on the first selected random number of the current round, the path importance parameter of the first lighting path sampled in the current round, and the path importance parameter of the first lighting path selected in the last round. Thus, an accuracy rate of the first lighting path selected in the current round can be improved, diversity of the candidate lighting paths correspondingly selected for the pixel points can be guaranteed when the lighting rendering is performed on the pixel points in the virtual scene, and rendering quality of the virtual scene can be further improved.

In an embodiment, the first lighting path selected in the last round is stored in a path storage container corresponding to the pixel point. The operation of taking the new first lighting path as a first lighting path selected in the current round includes: take the new first lighting path as the first lighting path selected in the current round, and replace, with the first lighting path selected in the current round, the first lighting path selected in the last round from the path storage container corresponding to the pixel point.

Specifically, the computer device may take the new first lighting path as the first lighting path selected in the current round, and replace, with the first lighting path selected in the current round, the first lighting path selected in the last round stored in the path storage container corresponding to the pixel point. The lighting path stored in the path storage container corresponding to the pixel point is updated with each round of lighting path sampling and each round of selection until the first sampling stop condition is satisfied. The computer device may take the first lighting path stored in the path storage container corresponding to the pixel point as the first candidate lighting path of the pixel point.

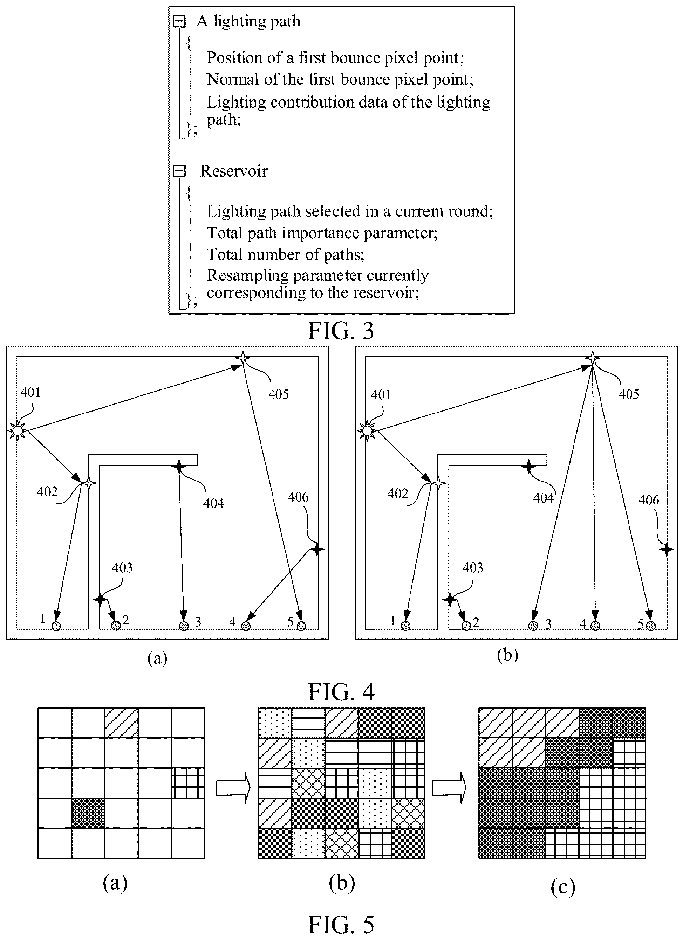

In an embodiment, the path storage container may include a path reservoir. As shown in FIG. 3, the first lighting path selected in the last round is stored in the path reservoir corresponding to the pixel point. The new first lighting path is taken as the first lighting path selected in the current round, and the first lighting path selected in the last round from the path reservoir corresponding to the pixel point is replaced with the first lighting path selected in the current round (namely the lighting path selected in the current round). The lighting path stored in the path reservoir corresponding to the pixel point is updated with each round of lighting path sampling and each round of selection until the first sampling stop condition is satisfied. The computer device may take the first lighting path stored in the path reservoir corresponding to the pixel point as the first candidate lighting path of the pixel point. In a process of updating the lighting path stored in the path reservoir, the lighting contribution value provided by the first lighting path selected the current round, a position and a normal of a first bounce pixel point in the first lighting path selected the current round, a number of first lighting paths sampled (namely a total number of paths), a total path importance parameter of the first lighting paths, and a resampling parameter currently corresponding to the path reservoir are continuously updated. An average path importance parameter of the first lighting paths may be determined according to a ratio of the total path importance parameter of the first lighting paths to the number of the first lighting paths sampled. The resampling parameter currently corresponding to the path reservoir may be determined and acquired based on a ratio of the average path importance parameter of the first lighting paths to the path importance parameter of the first lighting path selected in the current round.

In the embodiment described above, for each pixel point in the virtual scene, in the process of iteratively sampling the first lighting path of the pixel point, the first lighting path selected in each round is temporarily stored in the path storage container corresponding to the pixel point, and the first lighting path temporarily stored in the path storage container corresponding to the pixel point is updated after each round of sampling. Thus, an accuracy rate of the first candidate lighting path finally selected for each pixel point in the virtual scene can be improved, and the rendering quality of the virtual scene can be further improved.

In an embodiment, the operations of determining a neighborhood pixel point of the pixel point, determining a plurality of second lighting paths acquired through lighting path sampling on the neighborhood pixel point, and selecting a second candidate lighting path from the plurality of second lighting paths according to respective probabilities of selection of the plurality of second lighting paths (namely, determining a neighborhood pixel point of the pixel point, determining a plurality of second lighting paths acquired through lighting path sampling on the neighborhood pixel point, and selecting a second candidate lighting path from the plurality of second lighting paths) include: perform, for each neighborhood pixel point of the pixel point, a current round of path sampling on the neighborhood pixel point, and acquire a second lighting path sampled in the current round; select a new second lighting path from the second lighting path sampled in the current round and a second lighting path selected in a last round (according to respective probabilities of selection of the second lighting path sampled in the current round and the second lighting path selected in the last round), and take the new second lighting path as a second lighting path selected in the current round; and take a next round as a new current round, return to the operations of performing a current round of path sampling on the neighborhood pixel point, and acquiring a second lighting path sampled in the current round and continuously perform the operations until a second sampling stop condition is satisfied, and take a second lighting path selected in a final round as the second candidate lighting path.

Specifically, for each neighborhood pixel point of the pixel point in the virtual scene, the computer device may perform the current round of path sampling on the neighborhood pixel point, and acquire the second lighting path sampled in the current round. The computer device may acquire the second lighting path selected after the last round of sampling before the current round of sampling, select the new second lighting path from the second lighting path sampled in the current round and the second lighting path selected in the last round according to the respective probabilities of the selection of the second lighting path sampled in the current round and the second lighting path selected in the last round, and take the new second lighting path as the second lighting path selected in the current round. Then, the computer device may take the next round of sampling after the current round of sampling as the new current round of sampling, return to the operations that for each neighborhood pixel point of the pixel point in the virtual scene, the computer device may perform the current round of path sampling on the neighborhood pixel point, and acquire the second lighting path sampled in the current round and continuously perform the operations until the second sampling stop condition is satisfied, and take the second lighting path selected in the final round as the second candidate lighting path of the neighborhood pixel point.

In an embodiment, the second sampling stop condition may be either of a condition that a number of times of the lighting path sampling on the neighborhood pixel point reaches a preset number of times of sampling on the neighborhood pixel point, and a condition that a number of iterative sampling reaches the preset number of sampling on the neighborhood pixel point.

In an embodiment, the second lighting path selected in the last round is stored in a path storage container corresponding to the neighborhood pixel point. The operation of taking the new second lighting path as a second lighting path selected in the current round includes: take the new second lighting path as the second lighting path selected in the current round, and replace, with the second lighting path selected in the current round, the second lighting path selected in the last round from the path storage container corresponding to the neighborhood pixel point. The lighting path stored in the path storage container corresponding to the neighborhood pixel point is updated with each round of lighting path sampling and each round of selection until the second sampling stop condition is satisfied. The computer device may take the second lighting path stored in the path storage container corresponding to the neighborhood pixel point as the second candidate lighting path of the neighborhood pixel point. In this way, for each neighborhood pixel point corresponding to the pixel point in the virtual scene, in the process of iteratively sampling the second lighting path of the neighborhood pixel point, the second lighting path selected in each round is temporarily stored in the path storage container corresponding to the neighborhood pixel point, and the second lighting path temporarily stored in the path storage container corresponding to the neighborhood pixel point is updated after each round of sampling. Thus, an accuracy rate of the second candidate lighting path finally selected for each neighborhood pixel point of the pixel point in the virtual scene can be improved, and the rendering quality of the virtual scene can be further improved.

In an embodiment, the computer device may select a lighting path having the greatest lighting contribution from the second lighting path sampled in the current round and the second lighting path selected in the last round as the new second lighting path, and take the new second lighting path as the second lighting path selected in the current round.

In the embodiment described above, through iterative sampling of the second lighting path on the neighborhood pixel point, after each round of sampling, the new second lighting path is selected from the second lighting path sampled in the current round and the second lighting path selected in the last round according to the respective probabilities of the selection of the second lighting path sampled in the current round and the second lighting path selected in the last round. The new second lighting path is taken as the second lighting path selected in the current round. The second lighting path selected in the final round is taken as the second candidate lighting path. Since an important path is selected once in each round, the second lighting path selected in the last round participating in the current round of selection is guaranteed of high importance, an accuracy rate of the second candidate lighting path finally selected of the neighborhood pixel point can be improved. Thus, the lighting rendering quality can be further improved.

In an embodiment, the operation of selecting a new second lighting path from the second lighting path sampled in the current round and a second lighting path selected in a last round according to respective probabilities of selection of the second lighting path sampled in the current round and the second lighting path selected in the last round (namely, selecting a new second lighting path from the second lighting path sampled in the current round and a second lighting path selected in a last round) includes: determine a path importance parameter of the second lighting path sampled in the current round according to the lighting contribution value of the second lighting path sampled in the current round; determine a path importance parameter of the second lighting path selected in the last round according to the lighting contribution value of the second lighting path selected in the last round; acquire a second selected random number corresponding to the current round; and determine a value range to which the second selected random number belongs according to a value range mapped by the path importance parameter of the second lighting path sampled in the current round and a value range mapped by the path importance parameter of the second lighting path selected in the last round, and select the new second lighting path from the second lighting path sampled in the current round and the second lighting path selected in the last round according to the value range to which the second selected random number belongs.

In an embodiment, the computer device may determine the path importance parameter of the second lighting path sampled in the current round according to the lighting contribution value of the second lighting path sampled in the current round, and determine the path importance parameter of the second lighting path selected in the last round according to the lighting contribution value of the second lighting path selected in the last round. Then, the computer device may acquire the second selected random number corresponding to the current round, and select the new second lighting path from the second lighting path sampled in the current round and the second lighting path selected in the last round according to the second selected random number, the path importance parameter of the second lighting path sampled in the current round, and the path importance parameter of the second lighting path selected in the last round. The greater the path importance parameter is, the larger the value range mapped by the path importance parameter is. If the second selected random number is tossed to the value range mapped by the path importance parameter, a probability that the second selected random number falls within a larger value range is higher. The computer device may take, as the selected second candidate lighting path, the second lighting path corresponding to the path importance parameter mapped by the value range in which the second selected random number falls.

In an embodiment, the computer device may convert a color intensity value in the lighting contribution value of the second lighting path sampled in the current round into a color brightness value corresponding to the second lighting path sampled in the current round. Then, the computer device may determine the path importance parameter of the second lighting path sampled in the current round according to the color brightness value corresponding to the second lighting path sampled in the current round. For example, the computer device may directly take the color brightness value corresponding to the second lighting path sampled in the current round as the path importance parameter of the second lighting path sampled in the current round. For example, the computer device may also weigh the color brightness value corresponding to the second lighting path sampled in the current round to acquire the path importance parameter of the second lighting path sampled in the current round.

In an embodiment, the computer device may convert a color intensity value in the lighting contribution value of the second lighting path selected in the last round into a color brightness value corresponding to the second lighting path selected in the last round. Then, the computer device may determine the path importance parameter of the second lighting path selected in the last round according to the color brightness value corresponding to the second lighting path selected in the last round. For example, the computer device may directly take the color brightness value corresponding to the second lighting path selected in the last round as the path importance parameter of the second lighting path selected in the last round. For example, the computer device may also weigh the color brightness value corresponding to the second lighting path selected in the last round to acquire the path importance parameter of the second lighting path selected in the last round.

In the embodiment described above, in each round of selection, the new second lighting path is selected from the second lighting path sampled in the current round and the second lighting path selected in the last round based on the second selected random number of the current round, the path importance parameter of the second lighting path sampled in the current round, and the path importance parameter of the second lighting path selected in the last round. Thus, an accuracy rate of the second lighting path selected in the current round can be improved, diversity of the candidate lighting paths correspondingly selected for the neighborhood pixel points of the pixel points can be guaranteed when the lighting rendering is performed on the pixel points in the virtual scene, and rendering quality of the virtual scene can be further improved.

In an embodiment, the method further includes the following operations: determine, for each pixel point in the virtual scene, at least one initial neighborhood pixel point of the pixel point from the virtual scene; and take, for each initial neighborhood pixel point, the initial neighborhood pixel point as the neighborhood pixel point of the pixel point if no occlusion exists between the initial neighborhood pixel point and a bounce pixel point; the bounce pixel point being a first bounce pixel point on the first lighting path.

In an embodiment, for each pixel point in the virtual scene, the computer device may determine at least one initial neighborhood pixel point of the pixel point from the virtual scene. The computer device may determine that a first bounce pixel point on the first lighting path of the pixel point is the bounce pixel point. The bounce refers to a reflection or refraction effect of the surface of the virtual object on the light ray when the light ray enters the surface of the virtual object in the virtual scene. The surface of the virtual object is composed of many pixel points, and it may be determined that a first pixel point that reflects or refracts the light ray on the first lighting path is the bounce pixel point. For each initial neighborhood pixel point, the computer device may take the initial neighborhood pixel point as the neighborhood pixel point of the pixel point if no occlusion exists between the initial neighborhood pixel point and the bounce pixel point. If the occlusion exists between the initial neighborhood pixel point and the bounce pixel point, the computer device may skip the initial neighborhood pixel point. The initial neighborhood pixel point having the occlusion with the bounce pixel point is not taken as the neighborhood pixel point of the pixel point.

In an embodiment, as shown in (a) and (b) of FIG. 4, for a pixel point 5 in the virtual scene, the initial neighborhood pixel points (namely a pixel point 1, a pixel point 2, a pixel point 3, and a pixel point 4) of the pixel point 5 are determined from the virtual scene. The lighting path of the pixel point 5 is: the pixel point 5→a bounce pixel point 405→a virtual light source 401 (a direction of an arrow in FIG. 4 is acquired by reversing the lighting path direction according to a principle of light ray reversibility). The bounce pixel point 405 is the first bounce pixel point on the lighting path of the pixel point 5. Since no occlusion exists between each of the pixel point 3 and the pixel point 4 and the bounce pixel point 405, the pixel point 3 and the pixel 4 point are taken as the neighborhood pixel points of the pixel point 5. Since the occlusion exists between each of the pixel point 1 and the pixel point 2 and the bounce pixel point 405, the computer device may skip the pixel point 1 and the pixel point 2. The pixel point 1 and the pixel point 2 are not taken as the neighborhood pixel points of the pixel point5.

In an embodiment, as shown in FIG. 4 (a), the first candidate lighting path selected for the pixel point 5 is: the pixel point 5→the bounce pixel point 405→the virtual light source 401. The second candidate lighting path for the neighborhood pixel point (the pixel point 1) of the pixel point 5 is: the pixel point 1→the pixel point 402→ the virtual light source 401. The second candidate lighting path selected for the neighborhood pixel point (namely the pixel point 2) of the pixel point 5 is: the pixel point 2→the pixel point 403. The second candidate lighting path selected for the neighborhood pixel point (namely the pixel point 3) of the pixel point 5 is: the pixel point 3→the pixel point 404. The second candidate lighting path for the neighborhood pixel point (the pixel point 4) of the pixel point 5 is: the pixel point 4→the pixel point 406. In the selected lighting paths, the lighting paths of the pixel point 1 and the pixel point 5 are effective lighting paths merely. To be specific, direct lighting (namely the virtual light source 401) exists in the lighting paths of the pixel point 1 and the pixel point 5. The lighting paths of the pixel point 2, the pixel point 3, and the pixel point 4 are ineffective lighting paths. To be specific, no direct lighting exists in the lighting paths of the pixel point 2, the pixel point 3, and the pixel point 4, that is, no virtual light source 401 exists. Generally, a lighting contribution of the effective lighting path to the pixel point is greater than a lighting contribution of the ineffective lighting path to the pixel point. Thus, as shown in FIG. 4 (b), for the pixel point 5, the first candidate lighting path of the pixel point 5 may be selected as the target lighting path of the pixel point 5 from the first candidate lighting path of the pixel point 5 and the second candidate lighting paths of the pixel point 3 and the pixel point 4. Similarly, for the pixel point 3 and the pixel point 4, the pixel point 5 is the neighborhood pixel point of the pixel point 3 and the pixel point 4. The first candidate lighting path of pixel point 5 may alternatively be selected as the target lighting path of the pixel point 3 and the pixel point 4 from the first candidate lighting path of the pixel point 5 and the second candidate lighting paths of the pixel point 3 and the pixel point 4.

As shown in FIG. 5(a), for each pixel point (a small square represents one pixel point) in the virtual scene, merely one first lighting path is sampled for each pixel point. In this way, merely three pixel points in the virtual scene may find effective lighting paths through one time of path sampling, resulting in poor rendering quality of the virtual scene. As shown in FIG. 5(b), for each pixel point in the virtual scene, the plurality of first lighting paths are sampled for each pixel point. In this way, the pixel points in the virtual scene may basically find effective lighting paths merely through a plurality of times of path sampling. However, noise is still very serious, the lighting rendering effect is not smooth, and the rendering quality of the virtual scene is poor. As shown in FIG. 5(c), by the method for lighting rendering of this application, namely, for each pixel point in the virtual scene, the plurality of first lighting paths acquired through the lighting path sampling on the pixel point are determined, and the first candidate lighting path is selected from the plurality of first lighting paths according to the respective probabilities of the selection of the plurality of first lighting paths. The neighborhood pixel point of the pixel point is determined, the plurality of second lighting paths acquired through the lighting path sampling on the neighborhood pixel point are determined, and the second candidate lighting path is selected from the plurality of second lighting paths according to the respective probabilities of the selection of the plurality of second lighting paths. The related lighting path of the pixel point is determined, the lighting contribution of the related lighting path to the pixel point is determined with reference to the lighting contribution value of the target lighting path, and the comprehensive lighting contribution value of the pixel point is acquired. The lighting rendering is performed on each pixel point in the virtual scene by using the comprehensive lighting contribution value of each pixel point in the virtual scene. The lighting rendering effect can be made smooth, and the rendering quality of the virtual scene can be improved accordingly.

In the embodiment described above, for each initial neighborhood pixel point in the virtual scene, if the occlusion exists between the initial neighborhood pixel point and the bounce pixel point, the light ray bounced by the bounce pixel point does not reach the initial neighborhood pixel point. Thus, by taking the initial neighborhood pixel point having no occlusion with the bounce pixel point as the neighborhood pixel point of the pixel point, a light leakage effect can be effectively prevented in the rendered virtual scene.

In an embodiment, for each pixel point in the virtual scene, at least one initial neighborhood pixel point of the pixel point is determined from the virtual scene, and the initial neighborhood pixel point is directly taken as the neighborhood pixel point of the pixel point.

In an embodiment, the first candidate lighting path and the second candidate lighting path make up a candidate path set. The operation of selecting a target lighting path from the first candidate lighting path and the second candidate lighting path includes: select the target lighting path from the candidate path set; the probability of selection of each candidate lighting path from the candidate path set being positively correlated with the lighting contribution value of the candidate lighting path.

In an embodiment, a number of the second candidate lighting paths is at least one. For each pixel point in the virtual scene, the first candidate lighting path of the pixel point is taken as the lighting path selected in the first round. Each round from the second round is taken as the current round, a new lighting path is selected from a second candidate lighting path to be selected in the current round and the lighting path selected in the last round, and the new lighting path is taken as the lighting path selected in the current round. A next round is taken as a new current round. Return is performed to the operations that a new lighting path is selected from a second candidate lighting path to be selected in the current round and the lighting path selected in the last round, and the new lighting path is taken as the lighting path selected in the current round and the operations are continuously performed until a path selection stop condition is satisfied. The lighting path selected in the final round is taken as the target lighting path of the pixel point.

In an embodiment, the path selection stop condition may include either of a condition that a number of times of iterations reaches the number of the second candidate lighting paths, and a condition that the number of times of iterations reaches a preset number of times of iterations for path selection.

In an embodiment, the computer device may select the candidate lighting path having a greatest lighting contribution value as the target lighting path from the first candidate lighting path and the second candidate lighting path.

In the embodiment described above, the target lighting path is selected from the candidate path set, and the probability of the selection of each candidate lighting path from the candidate path set is positively correlated with the lighting contribution value of the candidate lighting path. In this way, the diversity of the candidate lighting paths can be guaranteed while the candidate lighting path having high importance can be guaranteed to be selected with a high probability, and the rendering quality of the virtual scene can be further improved.

In an embodiment, the operations of determining a related lighting path of the pixel point, determining, with reference to the lighting contribution value of the target lighting path, a lighting contribution of the related lighting path to the pixel point, and acquiring a comprehensive lighting contribution value of the pixel point include: eliminate a color intensity value from the lighting contribution value of the target lighting path based on a path importance parameter of the target lighting path, and acquire a color type value of the target lighting path; the path importance parameter of the target lighting path being configured for representing an intensity of a color in the lighting contribution value of the target lighting path; and assign the color type value of the target lighting path to an average path importance parameter of related lighting paths of the pixel point, and acquire the comprehensive lighting contribution value corresponding to the pixel point; the average path importance parameter being configured for representing an average intensity of colors in the lighting contribution values of the related lighting paths.

Specifically, for each pixel point in the virtual scene, the computer device may eliminate the color intensity value from the lighting contribution value of the target lighting path based on the path importance parameter of the target lighting path of the pixel point, and acquire the color type value of the target lighting path of the pixel point. Then, the computer device may assign the color type value of the target lighting path of the pixel point to an average path importance parameter of related lighting paths of the pixel point, and acquire the comprehensive lighting contribution value corresponding to the pixel point.

In an embodiment, the computer device may convert the color intensity value in the lighting contribution value of the target lighting path into a color saturation value corresponding to the target lighting path, and determine the path importance parameter of the target lighting path according to the color saturation value corresponding to the target lighting path. For each pixel point in the virtual scene, the computer device may eliminate the color intensity value from the lighting contribution value of the target lighting path based on the path importance parameter of the target lighting path of the pixel point, and acquire the color type value of the target lighting path of the pixel point. For each related lighting path of the pixel point, the color intensity value in the lighting contribution value of the related lighting path is converted into a color saturation value corresponding to the related lighting path, and the path importance parameter of the related lighting path is determined according to the color saturation value corresponding to the related lighting path. The computer device may average the path importance parameters of the related lighting paths of the pixel point, and acquire the average path importance parameter of the related lighting paths. Then, the computer device may assign the color type value of the target lighting path of the pixel point to the average path importance parameter of the related lighting paths of the pixel point, and acquire the comprehensive lighting contribution value corresponding to the pixel point.

In an embodiment, the computer device may convert the color intensity value in the lighting contribution value of the target lighting path into a color chroma value corresponding to the target lighting path, and determine the path importance parameter of the target lighting path according to the color chroma value corresponding to the target lighting path. For each pixel point in the virtual scene, the computer device may eliminate the color intensity value from the lighting contribution value of the target lighting path based on the path importance parameter of the target lighting path of the pixel point, and acquire the color type value of the target lighting path of the pixel point. For each related lighting path of the pixel point, the color intensity value in the lighting contribution value of the related lighting path is converted into a color chroma value corresponding to the related lighting path, and the path importance parameter of the related lighting path is determined according to the color chroma value corresponding to the related lighting path. Then, the computer device may average the path importance parameters of the related lighting paths of the pixel point, and acquire the average path importance parameter of the related lighting paths. Then, the computer device may assign the color type value of the target lighting path of the pixel point to the average path importance parameter of the related lighting paths of the pixel point, and acquire the comprehensive lighting contribution value corresponding to the pixel point.

In the embodiment described above, the color intensity value is eliminated from the lighting contribution value of the target lighting path through the path importance parameter of the target lighting path, such that the color type value of the target lighting path without the intensity may be acquired. Then, the average intensity of the colors in the lighting contribution values of the related lighting paths is assigned to the color type value of the target lighting path through the average path importance parameters of the related lighting paths of the pixel point, the comprehensive lighting contribution value corresponding to the pixel point can be acquired, and the rendering quality is further improved.

In an embodiment, the method further includes the following operations: convert the color intensity value in the lighting contribution value of the target lighting path into a color brightness value corresponding to the target lighting path; and determine the path importance parameter of the target lighting path according to the color brightness value corresponding to the target lighting path.

In an embodiment, the computer device may convert the color intensity value in the lighting contribution value of the target lighting path into the color brightness value corresponding to the target lighting path, and determine the path importance parameter of the target lighting path according to the color brightness value corresponding to the target lighting path. For each pixel point in the virtual scene, the computer device may eliminate the color intensity value from the lighting contribution value of the target lighting path based on the path importance parameter of the target lighting path of the pixel point, and acquire the color type value of the target lighting path of the pixel point. Then, the computer device may assign the color type value of the target lighting path of the pixel point to the average path importance parameter of the related lighting paths of the pixel point, and acquire the comprehensive lighting contribution value corresponding to the pixel point.

In the embodiment described above, the color intensity value in the lighting contribution value of the target lighting path is converted into the color brightness value corresponding to the target lighting path, and the path importance parameter of the target lighting path is determined according to the color brightness value corresponding to the target lighting path. Thus, a method for representing the color intensity based on brightness is provided.

In an embodiment, the method further includes the following operations: convert, for each related lighting path of the pixel point, a color intensity value in the lighting contribution value of the related lighting path into a color brightness value corresponding to the related lighting path; determine a path importance parameter of the related lighting path according to the color brightness value corresponding to the related lighting path; and average the path importance parameters of the related lighting paths of the pixel point, and acquire the average path importance parameter of the related lighting paths.

In an embodiment, for each pixel point in the virtual scene, the computer device may eliminate the color intensity value from the lighting contribution value of the target lighting path based on the path importance parameter of the target lighting path of the pixel point, and acquire the color type value of the target lighting path point of the pixel point. For each related lighting path of the pixel point, the color intensity value in the lighting contribution value of the related lighting path is converted into the color brightness value corresponding to the related lighting path, and the path importance parameter of the related lighting path is determined according to the color brightness value corresponding to the related lighting path. Then, the computer device may average the path importance parameters of the related lighting paths of the pixel point, and acquire the average path importance parameter of the related lighting paths. Then, the computer device may assign the color type value of the target lighting path of the pixel point to the average path importance parameter of the related lighting paths of the pixel point, and acquire the comprehensive lighting contribution value corresponding to the pixel point.

In an embodiment, the computer device may convert the color intensity value in the lighting contribution value of the target lighting path into the color brightness value corresponding to the target lighting path, and determine the path importance parameter of the target lighting path according to the color brightness value corresponding to the target lighting path. For each pixel point in the virtual scene, the computer device may eliminate the color intensity value from the lighting contribution value of the target lighting path based on the path importance parameter of the target lighting path of the pixel point, and acquire the color type value of the target lighting path of the pixel point. For each related lighting path of the pixel point, the color intensity value in the lighting contribution value of the related lighting path is converted into the color brightness value corresponding to the related lighting path, and the path importance parameter of the related lighting path is determined according to the color brightness value corresponding to the related lighting path. Then, the computer device may average the path importance parameters of the related lighting paths of the pixel point, and acquire the average path importance parameter of the related lighting paths. Then, the computer device may assign the color type value of the target lighting path of the pixel point to the average path importance parameter of the related lighting paths of the pixel point, and acquire the comprehensive lighting contribution value corresponding to the pixel point.

In an embodiment, the comprehensive lighting contribution value of the pixel point may be computed by the following formula: $R.W \leftarrow R.w/(R.M \cdot p(R.z))$

$$L = f(z)W(z)$$

In the formula, L indicates the comprehensive lighting contribution value of the pixel point, $f(z)$ indicates the lighting contribution value of the target lighting path of the pixel point, W(z) indicates the resampling parameters corresponding to the related lighting paths of the pixel point, $R.z$ indicates the target lighting path of the pixel point, $p(R.z)$ indicates the path importance parameter of the target lighting path, $R.w$ indicates the total path importance parameter of the related lighting paths, and $R.M$ indicates a total path number of the related lighting paths of the pixel point. If the target lighting path is selected for the pixel point, $W(z)$ equals $R.W. R.w/(R.M \cdot p(R.z))$ may be transformed into $(R.w/R.M) \cdot (1/p(R.z))$. And $(R.w/R.M)$ indicates the average path importance parameter of the related lighting paths. And $R.W$ indicates the resampling parameters corresponding to each related lighting path. The arrow ← indicates mapping.

In a case that the target lighting path is selected for the pixel point, $(R.w/R.M) \cdot (1/p(R.z))$ is substituted into $L = f(z)W(z)$, and transformation into $L = (R.w/R.M) \cdot (f(z)/p(R.z))$ is possible. And $(f(z)/p(R.z))$ indicates the color type value of the target lighting path acquired by eliminating the color intensity value from the lighting contribution value of the target lighting path. And L indicates the comprehensive lighting contribution value of the pixel point acquired by assigning the color type value of the target lighting path to the average path importance parameter of the related lighting paths.

In the embodiment described above, the color intensity value in the lighting contribution value of the related lighting path is converted into the color brightness value corresponding to the related lighting path, and the path importance parameter of the related lighting path is determined according to the color brightness value corresponding to the related lighting path. Then, the path importance parameters of the related lighting paths of the pixel point are averaged to acquire the average path importance parameter of the related lighting paths. Thus, a method for representing the average intensity of the color based on brightness is provided.

In an embodiment, the first lighting path and the second lighting path include indirect lighting paths acquired through indirect lighting sampling on the pixel point. The indirect lighting path being a lighting path formed after a light ray emitted by a virtual light source in the virtual scene is reflected or refracted by a virtual object in the virtual scene.

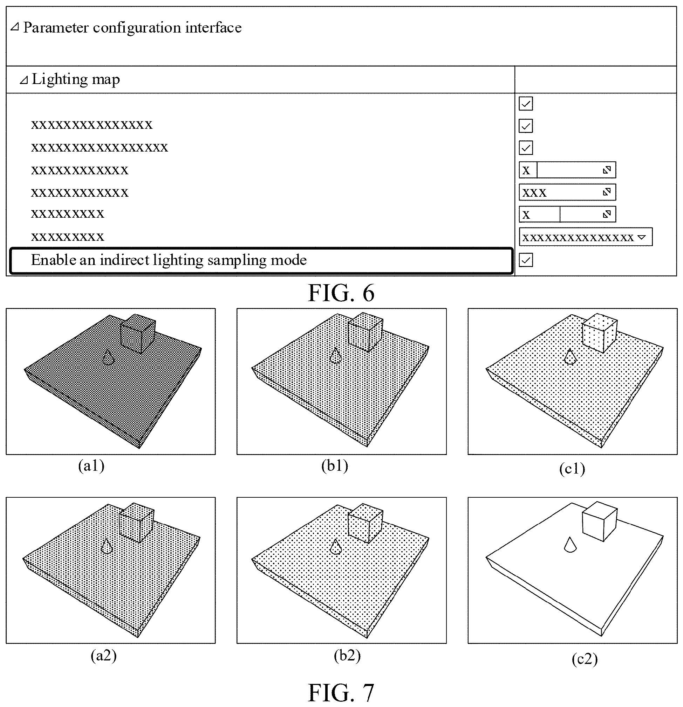

In an embodiment, as shown in FIG. 6, the computer device may enable an indirect lighting sampling mode through a parameter configuration interface. In a case that the indirect lighting sampling mode is enabled, for each pixel point in the virtual scene, the computer device may select a first candidate indirect lighting path from a plurality of first indirect lighting paths of the pixel point, and a probability of selection of the first indirect lighting path is positively correlated with a lighting contribution value of the first indirect lighting path. The computer device may select a second candidate indirect lighting path from a plurality of second indirect lighting paths of the neighborhood pixel point of the pixel point, and a probability of selection of the second indirect lighting path is positively correlated with a lighting contribution value of the second indirect lighting path. Then, the computer device may select a target indirect lighting path from the first candidate indirect lighting path and the second candidate indirect lighting path, determine, with reference to the lighting contribution value of the target indirect lighting path, a lighting contribution of the related indirect lighting path of the pixel point to the pixel point, and acquire a comprehensive lighting contribution value corresponding to the pixel point. Then, the computer device may pre-bake a lighting map corresponding to the virtual scene according to the comprehensive lighting contribution values of the pixel points in the virtual scene. The lighting map is configured for recording the comprehensive lighting contribution values of the pixel points in the virtual scene. Then, when receiving a rendering instruction, the computer device may perform the lighting rendering on the pixel points in the virtual scene according to the comprehensive lighting contribution values of the pixel points recorded in the pre-baked lighting map. In this way, rendering efficiency of the virtual scene can be improved.

In the embodiment described above, a method for indirect lighting path sampling suitable for indirect lighting sampling is provided. Through the method for indirect lighting path sampling in this embodiment, the rendering quality of the virtual scene can be improved, especially the rendering quality of the virtual scene with insufficient direct lighting light rays, namely insufficient direct lighting light rays.

In an embodiment, the first lighting path and the second lighting path include direct lighting paths acquired through direct lighting sampling on the pixel point. The direct lighting path is a lighting path formed by a light ray directly emitted by a virtual light source in the virtual scene.

In an embodiment, part (a1) in FIG. 7 indicates a lighting effect of a virtual scene before noise reduction, acquired by a conventional method for lighting rendering in a case that a number of lighting paths sampled for the pixel point is 64. Part (a2) in FIG. 7 indicates a lighting effect of a virtual scene after noise reduction, acquired by the conventional method for lighting rendering in the case that the number of lighting paths sampled for the pixel point is 64. The conventional method for lighting rendering is adopted for the lighting rendering on the virtual scene, and even if a rendered virtual scene image is subjected to the noise reduction in a case that the number of the sampled lighting paths is small, image quality after the noise reduction is still poor. Part (b1) in FIG. 7 indicates a lighting effect of the virtual scene before noise reduction, acquired by the conventional method for lighting rendering in a case that the number of the lighting paths sampled for the pixel point is 512. Part (b2) in FIG. 7 indicates a lighting effect of the virtual scene after noise reduction, acquired by the conventional method for lighting rendering in the case that the number of lighting paths sampled for the pixel point is 512. The conventional method for lighting rendering is adopted for the lighting rendering on the virtual scene, and even if a rendered virtual scene image is subjected to the noise reduction in a case that the number of the sampled lighting paths is slightly increased, the image quality after the noise reduction is not significantly improved. Part (c1) in FIG. 7 indicates a lighting effect of the virtual scene before noise reduction, acquired by the method for lighting rendering of this application in a case that the number of the lighting paths sampled for the pixel point is 64. Part (c2) in FIG. 7 indicates a lighting effect of the virtual scene after noise reduction, acquired by the method for lighting rendering of this application in the case that the number of lighting paths sampled for the pixel point is 64. The method for lighting rendering of this application is adopted for the lighting rendering on the virtual scene, and even if a rendered virtual scene image is not subjected to the noise reduction in a case that the number of the sampled lighting paths is small, image quality before the noise reduction is still significantly improved. After the noise reduction on the rendered virtual scene image, the image quality after the noise reduction is significantly improved.

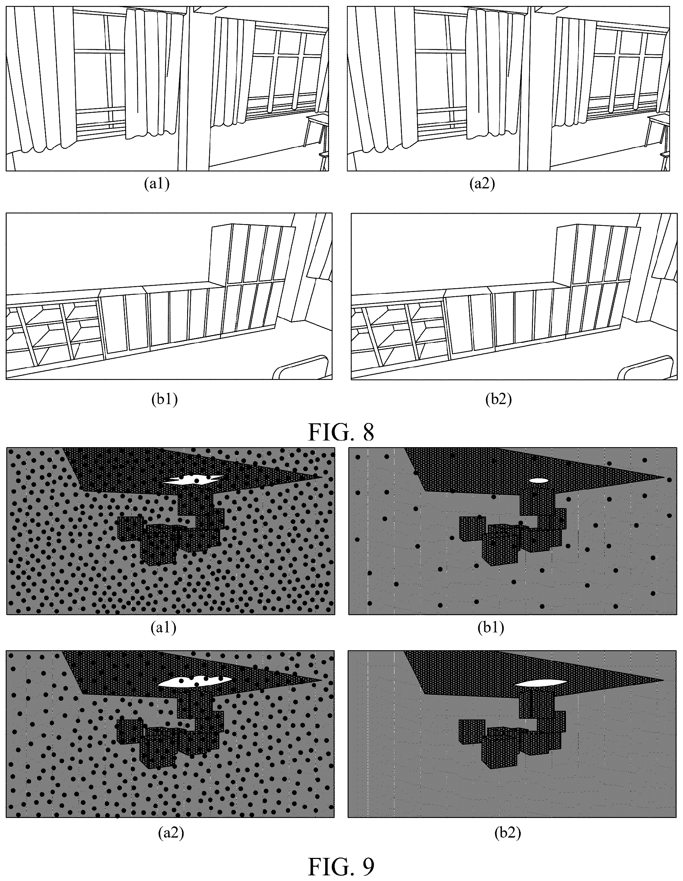

In an embodiment, in a case that the lighting condition of the virtual scene is desirable, namely sufficient direct lighting light rays, a virtual room A and a virtual room B with sufficient light rays are shown in FIG. 8 as examples. Part (a1) in FIG. 8 indicates a lighting effect of the virtual room A acquired by the conventional method for lighting rendering in a case that a number of lighting paths sampled for the pixel point in the virtual room A is 768. The conventional method for lighting rendering is adopted for the lighting rendering on the virtual room A, and merely in a case that the number of the sampled lighting paths is great, a lighting rendering effect of the virtual room A is desirable. However, the rendering efficiency is reduced by a great number of the sampled lighting paths. Part (a2) in FIG. 8 indicates a lighting effect of the virtual room A acquired by the method for lighting rendering of this application in a case that a number of lighting paths sampled for the pixel point in the virtual room A is 64. The method for lighting rendering of this application is adopted for the lighting rendering on the virtual room A, and in a case that the number of the sampled lighting paths is small, a lighting rendering effect of the virtual room A is also desirable. Part (b1) in FIG. 8 indicates a lighting effect of the virtual room B acquired by the conventional method for lighting rendering in a case that a number of lighting paths sampled for the pixel point in the virtual room B is 768. The conventional method for lighting rendering is adopted for the lighting rendering on the virtual room B, and merely in a case that the number of the sampled lighting paths is great, a lighting rendering effect of the virtual room B is desirable. However, the rendering efficiency is reduced by a great number of the sampled lighting paths. Part (b2) in FIG. 8 indicates a lighting effect of the virtual room B acquired by the method for lighting rendering of this application in a case that a number of lighting paths sampled for the pixel point in the virtual room B is 64. The method for lighting rendering of this application is adopted for the lighting rendering on the virtual room B, and in a case that the number of the sampled lighting paths is small, a lighting rendering effect of the virtual room B is also desirable. To sum up, when the lighting rendering is performed on the virtual scene by the method for lighting rendering of this application, the rendering quality can be improved on the premise of guaranteeing the rendering efficiency.

In an embodiment, as shown in FIG. 9, in a case that the lighting condition of the virtual scene is poor, namely insufficient direct lighting light rays, a virtual room C with insufficient light rays is shown in FIG. 9 as an example. Part (a1) in FIG. 9 indicates a lighting effect of the virtual room C before noise reduction, acquired by the conventional method for lighting rendering in a case that a number of lighting paths sampled for the pixel point in the virtual room C is 768. The conventional method for lighting rendering is adopted for the lighting rendering on the virtual room C, and in a case that the number of the sampled lighting paths is great, a lighting rendering effect of the virtual room C with insufficient light rays is poor. Part (a2) in FIG. 9 indicates a lighting effect of the virtual room C after the noise reduction, acquired by the conventional method for lighting rendering in a case that a number of lighting paths sampled for the pixel point in the virtual room C is 768. The conventional method for lighting rendering is adopted for the lighting rendering on the virtual room C, and even if a rendered image is subjected to the noise reduction in a case that the number of the sampled lighting paths is great, a lighting rendering effect of the virtual room C with insufficient light rays after the noise reduction is still poor.

Part (b1) in FIG. 9 indicates a lighting effect of the virtual room C before noise reduction, acquired by the method for lighting rendering of this application in a case that a number of lighting paths sampled for the pixel point in the virtual room C is 768. The method for lighting rendering of this application is adopted for the lighting rendering on the virtual room C, and in a case that the numbers of the sampled lighting paths are the same, a lighting rendering effect of the virtual room C with insufficient light rays is also desirable. Part (b2) in FIG. 9 indicates a lighting effect of the virtual room C after the noise reduction, acquired by the method for lighting rendering of this application in a case that a number of lighting paths sampled for the pixel point in the virtual room C is 768. The method for lighting rendering of this application is adopted for the lighting rendering on the virtual room C, and a rendered image is subjected to the noise reduction in a case that the numbers of the sampled lighting paths are equal, and a lighting rendering effect of the virtual room C with insufficient light rays after the noise reduction can be greatly improved. To sum up, through the method for lighting path sampling of this application, the rendering quality of the virtual scene can be improved, especially the rendering quality of the virtual scene with insufficient direct lighting light rays, namely insufficient direct lighting light rays.

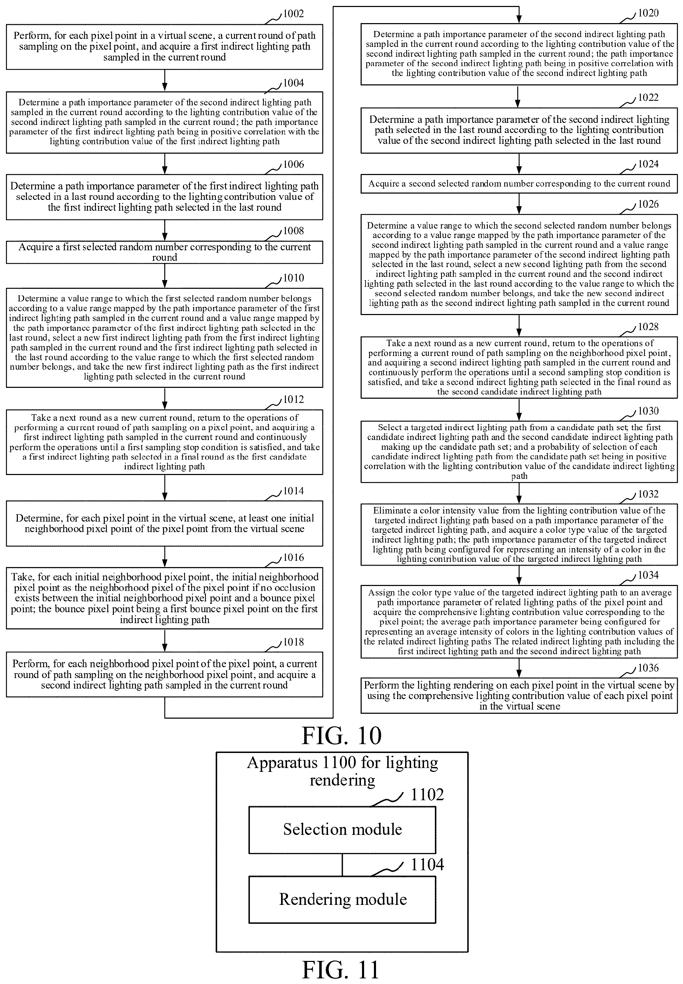

As shown in FIG. 10, in an embodiment, a method for lighting rendering is provided. The method may be applied to a computer device. The computer device may be a terminal or a server. The method may be performed by the terminal or the server separately, or may be implemented through interaction between the terminal and the server. This embodiment is described with application of this method to the computer device as an example. The method specifically includes the following operations:

Operation 1002: Perform, for each pixel point in a virtual scene, a current round of path sampling on a pixel point, and acquire a first indirect lighting path sampled in the current round.

Operation 1004: Determine a path importance parameter of the first indirect lighting path sampled in the current round according to a lighting contribution value of the first indirect lighting path sampled in the current round; the path importance parameter of the first indirect lighting path being positively correlated with the lighting contribution value of the first indirect lighting path.

Operation 1006: Determine a path importance parameter of the first indirect lighting path selected in a last round according to the lighting contribution value of the first indirect lighting path selected in the last round.

Operation 1008: Acquire a first selected random number corresponding to the current round.

Operation 1010: Determine a value range to which the first selected random number belongs according to a value range mapped by the path importance parameter of the first indirect lighting path sampled in the current round and a value range mapped by the path importance parameter of the first indirect lighting path selected in the last round, select a new first indirect lighting path from the first indirect lighting path sampled in the current round and the first indirect lighting path selected in the last round according to the value range to which the first selected random number belongs, and take the new first indirect lighting path as the first indirect lighting path selected in the current round.

Operation 1012: Take a next round as a new current round, return to the operations of performing a current round of path sampling on a pixel point, and acquiring a first indirect lighting path sampled in the current round and continuously perform the operations until a first sampling stop condition is satisfied, and take a first indirect lighting path selected in a final round as the first candidate indirect lighting path.

Operation 1014: Determine, for each pixel point in the virtual scene, at least one initial neighborhood pixel point of the pixel point from the virtual scene.

Operation 1016: Take, for each initial neighborhood pixel point, the initial neighborhood pixel point as the neighborhood pixel point of the pixel point if no occlusion exists between the initial neighborhood pixel point and a bounce pixel point; the bounce pixel point being a first bounce pixel point on the first indirect lighting path.

Operation 1018: Perform, for each neighborhood pixel point of the pixel point, a current round of path sampling on the neighborhood pixel point, and acquire a second indirect lighting path sampled in the current round.

Operation 1020: Determine a path importance parameter of the second indirect lighting path sampled in the current round according to the lighting contribution value of the second indirect lighting path sampled in the current round; the path importance parameter of the second indirect lighting path being positively correlated with the lighting contribution value of the second indirect lighting path.

Operation 1022: Determine a path importance parameter of the second indirect lighting path selected in the last round according to the lighting contribution value of the second indirect lighting path selected in the last round.

Operation 1024: Acquire a second selected random number corresponding to the current round.

Operation 1026: Determine a value range to which the second selected random number belongs according to a value range mapped by the path importance parameter of the second indirect lighting path sampled in the current round and a value range mapped by the path importance parameter of the second indirect lighting path selected in the last round, select a new second lighting path from the second indirect lighting path sampled in the current round and the second indirect lighting path selected in the last round according to the value range to which the second selected random number belongs, and take the new second indirect lighting path as the second indirect lighting path sampled in the current round.

Operation 1028: Take a next round as a new current round, return to the operations of performing a current round of path sampling on the neighborhood pixel point, and acquiring a second indirect lighting path sampled in the current round and continuously perform the operations until a second sampling stop condition is satisfied, and take a second indirect lighting path selected in the final round as the second candidate indirect lighting path.

Operation 1030: Select a target indirect lighting path from a candidate path set; the first candidate indirect lighting path and the second candidate indirect lighting path making up the candidate path set; and a probability of selection of each candidate indirect lighting path from the candidate path set being positively correlated with the lighting contribution value of the candidate indirect lighting path.

Operation 1032: Eliminate a color intensity value from the lighting contribution value of the target indirect lighting path based on a path importance parameter of the target indirect lighting path, and acquire a color type value of the target indirect lighting path; the path importance parameter of the target indirect lighting path being configured for representing an intensity of a color in the lighting contribution value of the target indirect lighting path.

Operation 1034: Assign the color type value of the target indirect lighting path to an average path importance parameter of related lighting paths of the pixel point, and acquire the comprehensive lighting contribution value corresponding to the pixel point; the average path importance parameter being configured for representing an average intensity of colors in the lighting contribution values of the related indirect lighting paths; and the related indirect lighting path including the first indirect lighting path and the second indirect lighting path.

Operation 1036: Perform the lighting rendering on each pixel point in the virtual scene by using the comprehensive lighting contribution value of each pixel point in the virtual scene.

This application further provides an application scene. The application scene applies the method for lighting rendering described above. Specifically, the method for lighting rendering may be applied to lighting rendering scenes of a virtual object in a game. The virtual scene in this application includes a game scene. The virtual object in the game scene may include at least one of a game character and a virtual object in the game. The virtual object in the game may include at least one of a virtual room, a virtual table lamp, a virtual plant, a virtual animal, etc. in the game. Specifically, for each pixel point in the game scene, the current round of path sampling is performed on the pixel point, and the first indirect lighting path sampled in the current round is acquired. The path importance parameter of the first indirect lighting path sampled in the current round is determined according to the lighting contribution value of the first lighting path sampled in the current round. The path importance parameter of the first indirect lighting path selected in the last round is determined according to the lighting contribution value of the first indirect lighting path selected in the last round. The first selected random number corresponding to the current round is acquired. The new first indirect lighting path is selected from the first indirect lighting path sampled in the current round and the first indirect lighting path selected in the last round according to the first selected random number, the path importance parameter of the first indirect lighting path sampled in the current round, and the path importance parameter of the first indirect lighting path selected in the current round. The new first indirect lighting path is taken as the first indirect lighting path selected in the current round. The next round is taken as the new current round. Return is performed to the operations that for each pixel point in the game scene, the current round of path sampling is performed on the pixel point, and the first indirect lighting path sampled in the current round is acquired and the operations are continuously performed until the first sampling stop condition is satisfied. The first indirect lighting path selected in the final round is taken as the first candidate indirect lighting path.

For each pixel point in the game scene, the at least one initial neighborhood pixel point of the pixel point is selected from the game scene. For each initial neighborhood pixel point, the initial neighborhood pixel point is taken as the neighborhood pixel point of the pixel point if no occlusion exists between the initial neighborhood pixel point and a bounce pixel point. The bounce pixel point is the first bounce pixel point on the first indirect lighting path. For each neighborhood pixel point of the pixel point, the current round of path sampling is performed on the neighborhood pixel point, and the second indirect lighting path sampled in the current round is acquired. The path importance parameter of the second indirect lighting path sampled in the current round is determined according to the lighting contribution value of the second indirect lighting path sampled in the current round. The path importance parameter of the second indirect lighting path selected in the last round is determined according to the lighting contribution value of the second indirect lighting path selected in the last round. The second selected random number corresponding to the current round is acquired. The value range to which the second selected random number belongs is determined according to the value range mapped by the path importance parameter of the second indirect lighting path sampled in the current round and the value range mapped by the path importance parameter of the second indirect lighting path selected in the last round. The new second lighting path is selected from the second indirect lighting path sampled in the current round and the second indirect lighting path selected in the last round according to the value range to which the second selected random number belongs. The new second indirect lighting path is taken as the second indirect lighting path sampled in the current round. The next round is taken as the new current round. Return is performed to the operations that the current round of path sampling is performed on the neighborhood pixel point, and the second indirect lighting path sampled in the current round is acquired and the operations are continuously performed until the second sampling stop condition is satisfied. The second indirect lighting path selected in the final round is taken as the second candidate indirect lighting path.

The target indirect lighting path is set from the candidate path set. The first candidate indirect lighting path and the second candidate indirect lighting path make up the candidate path set. The probability of the selection of each candidate indirect lighting path from the candidate path set is positively correlated with the lighting contribution value of the candidate indirect lighting path. The color intensity value is eliminated from the lighting contribution value of the target indirect lighting path based on the path importance parameter of the target indirect lighting path, and the color type value of the target indirect lighting path is acquired. The path importance parameter of the target indirect lighting path is configured for representing the intensity of the color in the lighting contribution value of the target indirect lighting path. The color type value of the target indirect lighting path is assigned to the average path importance parameter of the related lighting paths of the pixel point, and the comprehensive lighting contribution value corresponding to the pixel point is acquired. The average path importance parameter is configured for representing the average intensity of the colors in the lighting contribution values of the related indirect lighting paths. The related indirect lighting path includes the first indirect lighting path and the second indirect lighting path. The comprehensive lighting contribution value is configured for the lighting rendering on a corresponding pixel point in the game scene. Through the method for lighting rendering of this application, the lighting rendering quality of the virtual object in the game scene can be improved, and the lighting rendering effect of the virtual object in the game scene is made more realistic. For example, through the method for lighting rendering of this application, the lighting rendering quality of the virtual object such as the virtual room, the virtual table lamp, the virtual plant, and the virtual animal in the game scene can be improved, and the virtual object such as the virtual room, the virtual table lamp, the virtual plant, and the virtual animal has the more realistic lighting rendering effect.

This application further provides some other application scenes. The method for lighting rendering described above can be applied to these application scenes. Specifically, the method for lighting rendering may also be applied to scenes such as film and television special effects, visual design, virtual reality (VR), industrial simulation, and digital cultural creation. In the scenes such as the film and television special effects, the visual design, the virtual reality (VR), the industrial simulation, and the digital cultural creation, the lighting rendering on the virtual scene may also be involved. Through the method for lighting rendering of this application, rendering quality in the scenes such as the film and television special effects, the visual design, the virtual reality (VR), the industrial simulation, and the digital cultural creation can be improved.

Although steps in the flowcharts involved in the embodiments described above are shown sequentially in order, these steps are not necessarily performed sequentially in order. Unless explicitly stated in this text, performance of these steps is not strictly limited in order, and these steps can be performed in another order. In addition, at least some steps in the embodiments described above may include a plurality of sub-steps or a plurality of stages. These sub-steps or stages are not necessarily performed at the same moment, and may alternatively be performed at different moments. A performance sequence of these sub-steps or stages is not necessarily sequential, and these sub-steps or stages may be performed by turns or alternately with the other steps or at least some sub-steps or stages of the other steps.

In an embodiment, as shown in FIG. 11, an apparatus 1100 for lighting rendering is provided. The apparatus specifically includes:

a selection module 1102 configured to determine, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path; determine a neighborhood pixel point of the pixel point, determining a plurality of second lighting paths acquired through lighting path sampling on the neighborhood pixel point, and selecting a second candidate lighting path from the plurality of second lighting paths, such that a probability of the second candidate lighting path being selected is positively correlated with a corresponding lighting contribution value of the second lighting path; and select a target lighting path from the first candidate lighting path and the second candidate lighting path; and

a rendering module 1104 configured to determine a related lighting path of the pixel point, and determine, according to the lighting contribution value of the target lighting path, a lighting contribution that the related lighting path provides to the pixel point, to acquire a lighting contribution value of the pixel point; the related lighting path comprising the first lighting path and the second lighting path; and perform image rendering on the pixel point in the virtual scene by using the lighting contribution value of the pixel point in the virtual scene.

In an embodiment, the selection module 1102 is further configured to perform, for each pixel point in the virtual scene, a current round of path sampling on the pixel point, and acquire a first lighting path sampled in the current round; select a new first lighting path from the first lighting path sampled in the current round and a first lighting path selected in a last round according to respective probabilities of selection of the first lighting path sampled in the current round and the first lighting path selected in the last round, and take the new first lighting path as a first lighting path selected in the current round; and take a next round as a new current round, return to the operations of performing a current round of path sampling on the pixel point, and acquiring a first lighting path sampled in the current round and continuously perform the operations until a first sampling stop condition is satisfied, and take a first lighting path selected in a final round as the first candidate lighting path.

In an embodiment, the selection module 1102 is further configured to determine a path importance parameter of the first lighting path sampled in the current round according to the lighting contribution value of the first lighting path sampled in the current round; determine a path importance parameter of the first lighting path selected in the last round according to the lighting contribution value of the first lighting path selected in the last round; acquire a first selected random number corresponding to the current round; and determine a value range to which the first selected random number belongs according to a value range mapped by the path importance parameter of the first lighting path sampled in the current round and a value range mapped by the path importance parameter of the first lighting path selected in the last round, and select the new first lighting path from the first lighting path sampled in the current round and the first lighting path selected in the last round according to the value range to which the first selected random number belongs; the path importance parameter being positively correlated with the size of the value range mapped.

In an embodiment, the first lighting path selected in the last round is stored in a path storage container corresponding to the pixel point. The selection module 1102 is further configured to take the new first lighting path as the first lighting path selected in the current round, and replace, with the first lighting path selected in the current round, the first lighting path selected in the last round from the path storage container corresponding to the pixel point.

In an embodiment, the selection module 1102 is further configured to perform, for each neighborhood pixel point of the pixel point, a current round of path sampling on the neighborhood pixel point, and acquire a second lighting path sampled in the current round; select a new second lighting path from the second lighting path sampled in the current round and a second lighting path selected in a last round according to respective probabilities of selection of the second lighting path sampled in the current round and the second lighting path selected in the last round, and take the new second lighting path as a second lighting path selected in the current round; and take a next round as a new current round, return to the operations of performing a current round of path sampling on the neighborhood pixel point, and acquiring a second lighting path sampled in the current round and continuously perform the operations until a second sampling stop condition is satisfied, and take a second lighting path selected in a final round as the second candidate lighting path.

In an embodiment, the selection module 1102 is further configured to determine a path importance parameter of the second lighting path sampled in the current round according to the lighting contribution value of the second lighting path sampled in the current round; determine a path importance parameter of the second lighting path selected in the last round according to the lighting contribution value of the second lighting path selected in the last round; acquire a second selected random number corresponding to the current round; and determine a value range to which the second selected random number belongs according to a value range mapped by the path importance parameter of the second lighting path sampled in the current round and a value range mapped by the path importance parameter of the second lighting path selected in the last round, and select the new second lighting path from the second lighting path sampled in the current round and the second lighting path selected in the last round according to the value range to which the second selected random number belongs; the path importance parameter being positively correlated with the size of the value range mapped.

In an embodiment, the selection module 1102 is further configured to determine, for each pixel point in the virtual scene, at least one initial neighborhood pixel point of the pixel point from the virtual scene; and take, for each initial neighborhood pixel point, the initial neighborhood pixel point as the neighborhood pixel point of the pixel point if no occlusion exists between the initial neighborhood pixel point and a bounce pixel point. The bounce pixel point being a first bounce pixel point on the first lighting path.

In an embodiment, the first candidate lighting path and the second candidate lighting path make up a candidate path set. The selection module 1102 is further configured to select the target lighting path from the candidate path set; the probability of selection of each candidate lighting path from the candidate path set being positively correlated with the lighting contribution value of the candidate lighting path.

In an embodiment, the rendering module 1104 is further configured to eliminate a color intensity value from the lighting contribution value of the target lighting path based on a path importance parameter of the target lighting path, and acquire a color type value of the target lighting path; the path importance parameter of the target lighting path being configured for representing an intensity of a color in the lighting contribution value of the target lighting path; and assign the color type value of the target lighting path to an average path importance parameter of related lighting paths of the pixel point, and acquire the comprehensive lighting contribution value corresponding to the pixel point; the average path importance parameter being configured for representing an average intensity of colors in the lighting contribution values of the related lighting paths.

In an embodiment, the rendering module 1104 is further configured to convert the color intensity value in the lighting contribution value of the target lighting path into a color brightness value corresponding to the target lighting path; and determine the path importance parameter of the target lighting path according to the color brightness value corresponding to the target lighting path.

In an embodiment, the rendering module 1104 is further configured to convert, for each related lighting path of the pixel point, a color intensity value in the lighting contribution value of the related lighting path into a color brightness value corresponding to the related lighting path; determine a path importance parameter of the related lighting path according to the color brightness value corresponding to the related lighting path; and average the path importance parameters of the related lighting paths of the pixel point, and acquire the average path importance parameter of the related lighting paths.

In an embodiment, the first lighting path and the second lighting path include indirect lighting paths acquired through indirect lighting sampling on the pixel point; the indirect lighting path being a lighting path formed after a light ray emitted by a virtual light source in the virtual scene is reflected or refracted by a virtual object in the virtual scene.

According to the apparatus for lighting rendering, for each pixel point in the virtual scene, the plurality of first lighting paths acquired through lighting path sampling on the pixel point are determined, and the first candidate lighting path is selected from the plurality of first lighting paths according to the respective probabilities of the selection of the plurality of first lighting paths. The respective probabilities of the selection of the plurality of first lighting paths are positively correlated with the respective lighting contribution values of the plurality of first lighting paths. The greater the lighting contribution of the first lighting path to the pixel point is, the higher importance of the first lighting path to the pixel point is, and the higher the probability of the selection of the first lighting path is. The neighborhood pixel point of the pixel point is determined, the plurality of second lighting paths acquired through lighting path sampling on the neighborhood pixel point are determined, and the second candidate lighting path is selected from the plurality of second lighting paths according to respective probabilities of selection of the plurality of second lighting paths. The respective probabilities of the selection of the plurality of second lighting paths are positively correlated with the respective lighting contribution values of the plurality of second lighting paths. The greater the lighting contribution of the second lighting path to the neighborhood pixel point is, the higher importance of the second lighting path to the neighborhood pixel point is, and the higher the probability of the selection of the second lighting path is. The target lighting path is selected from the first candidate lighting path and the second candidate lighting path. The related lighting path of the pixel point is determined, the lighting contribution of the related lighting path to the pixel point is determined with reference to the lighting contribution value of the target lighting path, and the comprehensive lighting contribution value of the pixel point is acquired. The lighting rendering is performed on each pixel point in the virtual scene by using the comprehensive lighting contribution value of each pixel point in the virtual scene. Compared with a conventional method for lighting rendering on a virtual scene by integrating lighting contribution values provided by lighting paths acquired through uniform sampling on a pixel point, since the related lighting path includes the first lighting path and the second lighting path, this application computes the comprehensive lighting contribution value provided for the pixel point by the related lighting paths corresponding to the pixel point and the neighborhood pixel point of the pixel point, for the lighting rendering on the pixel point. In this way, rendering quality can be improved in the case of a small number of lighting paths sampled on the pixel point.

The modules in the apparatus for lighting rendering may be implemented in whole or in part by software, hardware and their combinations. The modules may be embedded in or independent of a processor in a computer device in the form of hardware, or may be stored in a memory in the computer device in the form of software, such that the processor may invoke and perform operations corresponding to the modules described above.

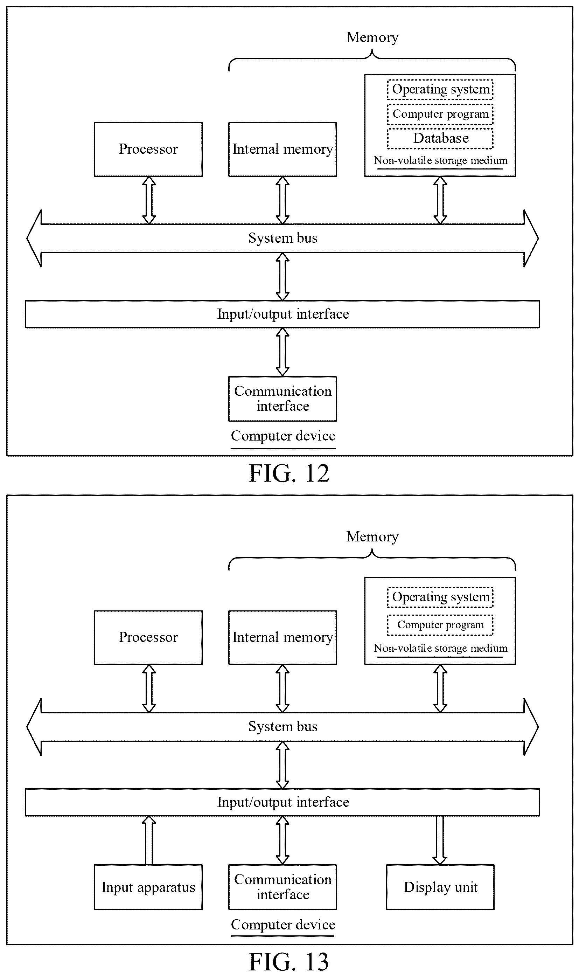

In an embodiment, a computer device is provided. The computer device may be a server, and an internal structure diagram of the server may be shown in FIG. 12. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running of the operating system and the computer program in the non-volatile storage medium. The input/output interface of the computer device is configured to exchange information between the processor and an external device. The communication interface of the computer device is configured to communicate with an external terminal through networking. The computer program, when executed by the processor, implements the method for lighting rendering.

In an embodiment, a computer device is provided. The computer device may be a terminal, and an internal structure diagram of the terminal may be shown in FIG. 13. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The input/output interface of the computer device is configured to exchange information between the processor and an external device. The communication interface of the computer device is configured to implement wired or wireless communication with the external terminal, and the wireless mode may be implemented through wireless fidelity (WIFI), a mobile cellular network, near field communication (NFC), or other technologies. The computer program, when executed by the processor, implements the method for lighting rendering. The display unit of the computer device is configured to form a visually visible picture, and may be a display screen, a projection apparatus, or a virtual reality imaging apparatus. The display screen may be a liquid crystal display screen or an electronic ink display screen. The input apparatus of the computer device may be a touch layer covering the display screen, or may be a button, a trackball, or a touch pad arranged on a shell of the computer device, or may be an external keyboard, a touch pad, or a mouse.

For those skilled in the art, the structures shown in FIG 12 and FIG. 13 are merely block diagrams of some structures related to the solution of this application, and do not constitute limitation to the computer device to which the solution of this application is applied. The specific computer device may include more or less components than those shown in the figure, or combine some components, or have different component arrangements.

In an embodiment, a computer device is further provided. The computer device includes a memory and a processor, the memory having a computer program stored therein, and the processor, when executing the computer program, implementing operations in the method embodiments described above.

In an embodiment, a computer-readable storage medium is provided. The computer-readable storage medium has a computer program stored therein, the computer program, when executed by a processor, implementing operations of the method embodiments described above.

In an embodiment, a computer program product is provided. The computer program product includes a computer program, the computer program, when executed by a processor, implementing operations of the method embodiments described above.

User information (including but not limited to user device information and user personal information) and data (including but not limited to data for analysis, data stored, and data displayed) that are involved in this application are information and data that are authorized by the user or fully authorized by all parties, and the collection, use, and processing of relevant data need to comply with relevant laws, regulations, and standards in relevant countries and regions.

For those skilled in the art, all or some processes implementing the method in the embodiment described above can be implemented by instructing related hardware by the computer program. The computer program may be stored in a non-volatile computer-readable storage medium, and the computer program, when executed, may include the processes of the method embodiments described above. Any reference to the memory, the storage, the database, or other media used in the embodiments according to this application may include at least one of a non-volatile memory and a volatile memory. The non-volatile memory may include a read-only memory (ROM), a magnetic tape, a floppy disk, a flash memory, an optical memory, etc. The volatile memory may include a random access memory (RAM) or an external cache memory. The RAM may be in various forms, such as a static random access memory (SRAM) or a dynamic random access memory (DRAM), which is illustrative and non-limitative.

The technical features of the embodiments described above can be combined in different manners to form other embodiments. To simplify description, not all possible combinations of the features of the embodiments described above are described. However, the combinations of these technical features are to fall within the scope in the description as long as no conflict exists.

The embodiments described above are merely several types of implementations of this application, and are specifically described in detail, but cannot be interpreted as limitation to the scope of the patent for the invention as a result. For those skilled in the art, several variations and improvements can also be made without departing from the concept of this application, and are to fall within the protection scope of this application. Hence, the protection scope of the patent for this application is to be subject to the appended claims.

## Claims

1. An image rendering method, performed by a computer device, comprising:

> determining, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path;
> determining a neighborhood pixel point of the pixel point, determining a plurality of second lighting paths acquired through lighting path sampling on the neighborhood pixel point, and selecting a second candidate lighting path from the plurality of second lighting paths, such that a probability of the second candidate lighting path being selected is positively correlated with a corresponding lighting contribution value of the second lighting path;
> selecting a target lighting path from the first candidate lighting path and the second candidate lighting path;
> determining a related lighting path of the pixel point, and determining, according to the lighting contribution value of the target lighting path, a lighting contribution that the related lighting path provides to the pixel point, to acquire a lighting contribution value of the pixel point; the related lighting path comprising the first lighting path and the second lighting path; and
> performing image rendering on the pixel point in the virtual scene by using the lighting contribution value of the pixel point in the virtual scene.

2. The method according to claim 1, wherein the determining, for a pixel point in a virtual scene, a plurality of first lighting paths acquired through lighting path sampling on the pixel point, and selecting a first candidate lighting path from the plurality of first lighting paths comprise;

> performing, for the pixel point in the virtual scene, a current round of path sampling on the pixel point, and acquiring a first lighting path sampled in the current round;
> selecting a new first lighting path from the first lighting path sampled in the current round and a first lighting path selected in a last round, and taking the new first lighting path as a first lighting path selected in the current round; and
> taking a next round as a new current round, returning to the operations of performing a current round of path sampling on the pixel point, and acquiring a first lighting path sampled in the current round and continuously performing the operations until a first sampling stop condition is satisfied, and taking a first lighting path selected in a final round as the first candidate lighting path.

3. The method according to claim 2, wherein the selecting a new first lighting path from the first lighting path sampled in the current round and a first lighting path selected in a last round comprises:

determining a path importance parameter of the first lighting path sampled in the current round according to the lighting contribution value of the first lighting path sampled in the current round; determining a path importance parameter of the first lighting path selected in the last round according to the lighting contribution value of the first lighting path selected in the last round; acquiring a first selected random number corresponding to the current round; and determining a value range to which the first selected random number belongs according to a value range mapped by the path importance parameter of the first lighting path sampled in the current round and a value range mapped by the path importance parameter of the first lighting path selected in the last round, and selecting the new first lighting path from the first lighting path sampled in the current round and the first lighting path selected in the last round according to the value range to which the first selected random number belongs; the path importance parameter being positively correlated with a size of the value range mapped.

4. The method according to claim 2 or 3, wherein the first lighting path selected in the last round is stored in a path storage container corresponding to the pixel point; and
the taking the new first lighting path as a first lighting path selected in the current round comprises:
taking the new first lighting path as the first lighting path selected in the current round, and replacing, with the first lighting path selected in the current round, the first lighting path selected in the last round from the path storage container corresponding to the pixel point.

5. The method according to any one of claims 1 to 4, wherein the determining a neighborhood pixel point of the pixel point, determining a plurality of second lighting paths acquired through lighting path sampling on the neighborhood pixel point, and selecting a second candidate lighting path from the plurality of second lighting paths comprise:

performing, for each neighborhood pixel point of the pixel point, a current round of path sampling on the neighborhood pixel point, and acquiring a second lighting path sampled in the current round;
selecting a new second lighting path from the second lighting path sampled in the current round and a second lighting path selected in a last round, and taking the new second lighting path as a second lighting path selected in the current round; and
taking a next round as a new current round, returning to the operations of performing a current round of path sampling on the neighborhood pixel point, and acquiring a second lighting path sampled in the current round and continuously performing the operations until a second sampling stop condition is satisfied, and taking a second lighting path selected in a final round as the second candidate lighting path.

6. The method according to claim 5, wherein the selecting a new second lighting path from the second lighting path sampled in the current round and a second lighting path selected in a last round comprises:

determining a path importance parameter of the second lighting path sampled in the current round according to the lighting contribution value of the second lighting path sampled in the current round; determining a path importance parameter of the second lighting path selected in the last round according to the lighting contribution value of the second lighting path selected in the last round; acquiring a second selected random number corresponding to the current round; and determining a value range to which the second selected random number belongs according to a value range mapped by the path importance parameter of the second lighting path sampled in the current round and a value range mapped by the path importance parameter of the second lighting path selected in the last round, and selecting the new second lighting path from the second lighting path sampled in the current round and the second lighting path selected in the last round according to the value range to which the second selected random number belongs; the path importance parameter being positively correlated with a size of the value range mapped.

7. The method according to any one of claims 1 to 6, further comprising:

determining, for the pixel point in the virtual scene, at least one initial neighborhood pixel point of the pixel point from the virtual scene; and taking, for each initial neighborhood pixel point, the initial neighborhood pixel point as the neighborhood pixel point of the pixel point if no occlusion exists between the initial neighborhood pixel point and a bounce pixel point; the bounce pixel point being a first bounce pixel point on the first lighting path.

8. The method according to any one of claims 1 to 7, wherein the first candidate lighting path and the second candidate lighting path make up a candidate path set; and the selecting a target lighting path from the first candidate lighting path and the second candidate lighting path comprises:

    selecting the target lighting path from the candidate path set; the probability of each candidate lighting path selected from the candidate path set being positively correlated with the lighting contribution value of the candidate lighting path.

9. The method according to any one of claims 1 to 8, wherein the determining, according to the lighting contribution value of the target lighting path, a lighting contribution that the related lighting path provides to the pixel point, to acquire a lighting contribution value of the pixel point comprise:

    eliminating a color intensity value from the lighting contribution value of the target lighting path based on a path importance parameter of the target lighting path, and acquiring a color type value of the target lighting path; the path importance parameter of the target lighting path being configured for representing an intensity of a color in the lighting contribution value of the target lighting path; and assigning the color type value of the target lighting path to an average path importance parameter of related lighting paths of the pixel point, and acquiring the lighting contribution value corresponding to the pixel point; the average path importance parameter being configured for representing an average intensity of colors in the lighting contribution values of the related lighting paths.

10. The method according to claim 9, further comprising:

    converting the color intensity value in the lighting contribution value of the target lighting path into a color brightness value corresponding to the target lighting path; and determining the path importance parameter of the target lighting path according to the color brightness value corresponding to the target lighting path.

11. The method according to claim 9 or 10, further comprising:

    converting, for each related lighting path of the pixel point, a color intensity value in the lighting contribution value of the related lighting path into a color brightness value corresponding to the related lighting path; determining a path importance parameter of the related lighting path according to the color brightness value corresponding to the related lighting path; and averaging the path importance parameters of the related lighting paths of the pixel point, and acquiring the average path importance parameter of the related lighting paths.

12. The method according to any one of claims 1 to 11, wherein the first lighting path and the second lighting path comprise indirect lighting paths acquired through indirect lighting sampling on the pixel point; the indirect lighting path being a lighting path formed after a light ray emitted by a virtual light source in the virtual scene is reflected or refracted by a virtual object in the virtual scene.

13. An apparatus for image rendering, comprising:

    a selection module configured to determine, for a pixel point in a virtual scene, a plurality of first lighting paths acquired through lighting path sampling on the pixel point, and selecting a first candidate lighting path from the plurality of first lighting paths, such that a probability of the first candidate lighting path being selected is positively correlated with a corresponding lighting contribution value of the first candidate lighting path; determine a neighborhood pixel point of the pixel point, determining a plurality of second lighting paths acquired through lighting path sampling on the neighborhood pixel point, and selecting a second candidate lighting path from the plurality of second lighting paths, such that a probability of the second candidate lighting path being selected is positively correlated with a corresponding lighting contribution value of the second lighting path; and select a target lighting path from the first candidate lighting path and the second candidate lighting path; and a rendering module configured to determine a related lighting path of the pixel point, and determine, according to the lighting contribution value of the target lighting path, a lighting contribution that the related lighting path provides to the pixel point, to acquire a lighting contribution value of the pixel point; the related lighting path comprising the first lighting path and the second lighting path; and perform image rendering on the pixel point in the virtual scene by using the lighting contribution value of the pixel point in the virtual scene.

14. A computer device, comprising a memory and a processor, the memory having a computer program stored therein, and the processor, when executing the computer program, implementing operations of the method according to any one of claims 1 to 12.

15. A computer-readable storage medium, having a computer program stored therein, the computer program, when executed by a processor, implementing operations of the method according to any one of claims 1 to 12.

16. A computer program product, comprising a computer program, the computer program, when executed by a processor, implementing operations of the method according to any one of claims 1 to 12.

104

Server

Data storage system

... Communication network

102

Terminal

For example

## FIG. 1

202

Determine, for each pixel point in a virtual scene, a plurality of first lighting paths acquired through lighting path sampling on the pixel point, and select a first candidate lighting path from the plurality of first lighting paths according to respective probabilities of selection of the plurality of first lighting paths; the respective probabilities of the selection of the plurality of first lighting paths being in positive correlation with respective lighting contribution values of the plurality of first lighting paths

204

Determine a neighborhood pixel point of the pixel point, determine a plurality of second lighting paths acquired through lighting path sampling on the neighborhood pixel point, and select a second candidate lighting path from the plurality of second lighting paths according to respective probabilities of selection of the plurality of second lighting paths; the respective probabilities of the selection of the plurality of second lighting paths being in positive correlation with respective lighting contribution values of the plurality of second lighting paths

206

Select a targeted lighting path from the first candidate lighting path and the second candidate lighting path

208

Determine a related lighting path of the pixel point, determine, with reference to the lighting contribution value of the targeted lighting path, a lighting contribution of the related lighting path to the pixel point, and acquire a comprehensive lighting contribution value of the pixel point; the related lighting path including the first lighting path and the second lighting path

210

Perform the lighting rendering on each pixel point in the virtual scene by using the comprehensive lighting contribution value of each pixel point in the virtual scene

## FIG. 2

⊟ A lighting path
{
    Position of a first bounce pixel point;
    Normal of the first bounce pixel point;
    Lighting contribution data of the lighting
    path;
};

⊟ Reservoir
{
    Lighting path selected in a current round;
    Total path importance parameter;
    Total number of paths;
    Resampling parameter currently
    corresponding to the reservoir;
};

FIG. 3

(a)                                                    (b)

FIG. 4

(a)                        (b)                        (c)

FIG. 5

◁ Parameter configuration interface

| ◁ Lighting map | |
|---|---|
| | ☑ |
| XXXXXXXXXXXXXXX | ☑ |
| XXXXXXXXXXXXXXXX | ☑ |
| XXXXXXXXXXXX | X ◹ |
| XXXXXXXXXXXX | XXX ◹ |
| XXXXXXXXX | X ◹ |
| XXXXXXXXX | XXXXXXXXXXXXXX ▽ |
| Enable an indirect lighting sampling mode | ☑ |

## FIG. 6

(a1)          (b1)          (c1)

(a2)          (b2)          (c2)

## FIG. 7

(a1)　　　　　　　　(a2)

(b1)　　　　　　　　(b2)

FIG. 8

(a1)　　　　　　　　(b1)

(a2)　　　　　　　　(b2)

FIG. 9

```
┌─────────────────────────────────────────┐ 1002          ┌──────────────────────────────────────────────┐ 1020
│ Perform, for each pixel point in a virtual scene, a     │ Determine a path importance parameter of the second indirect lighting path │
│ current round of path sampling on the pixel point, and  │ sampled in the current round according to the lighting contribution value of the │
│ acquire a first indirect lighting path sampled in the   │ second indirect lighting path sampled in the current round; the path importance │
│ current round                                           │ parameter of the second indirect lighting path being in positive correlation with │
└─────────────────────────────────────────┘               │ the lighting contribution value of the second indirect lighting path │
                     │                                     └──────────────────────────────────────────────┘
                     ▼                                                           │
┌─────────────────────────────────────────┐ 1004                                ▼
│ Determine a path importance parameter of the second     ┌──────────────────────────────────────────────┐ 1022
│ indirect lighting path sampled in the current round     │ Determine a path importance parameter of the second indirect lighting │
│ according to the lighting contribution value of the     │ path selected in the last round according to the lighting contribution │
│ second indirect lighting path sampled in the current    │ value of the second indirect lighting path selected in the last round │
│ round; the path importance parameter of the first       └──────────────────────────────────────────────┘
│ indirect lighting path being in positive correlation                          │
│ with the lighting contribution value of the first                             ▼
│ indirect lighting path                    │              ┌──────────────────────────────────────────────┐ 1024
└─────────────────────────────────────────┘               │ Acquire a second selected random number corresponding to the current round │
                     │                                     └──────────────────────────────────────────────┘
                     ▼                                                           │
┌─────────────────────────────────────────┐ 1006                                ▼
│ Determine a path importance parameter of the first      ┌──────────────────────────────────────────────┐ 1026
│ indirect lighting path selected in a last round         │ Determine a value range to which the second selected random number belongs │
│ according to the lighting contribution value of         │ according to a value range mapped by the path importance parameter of the │
│ the first indirect lighting path selected in the last   │ second indirect lighting path sampled in the current round and a value range │
│ round                                     │              │ mapped by the path importance parameter of the second indirect lighting path │
└─────────────────────────────────────────┘               │ selected in the last round, select a new second lighting path from the second │
                     │                                     │ indirect lighting path sampled in the current round and the second indirect │
                     ▼                                     │ lighting path selected in the last round according to the value range to which the │
┌─────────────────────────────────────────┐ 1008          │ second selected random number belongs, and take the new second indirect │
│ Acquire a first selected random number corresponding to │ lighting path as the second indirect lighting path sampled in the current round │
│ the current round                         │              └──────────────────────────────────────────────┘
└─────────────────────────────────────────┘                                     │
                     │                                                           ▼
                     ▼                                     ┌──────────────────────────────────────────────┐ 1028
┌─────────────────────────────────────────┐ 1010          │ Take a next round as a new current round, return to the operations of │
│ Determine a value range to which the first selected     │ performing a current round of path sampling on the neighborhood pixel point, │
│ random number belongs according to a value range        │ and acquiring a second indirect lighting path sampled in the current round and │
│ mapped by the path importance parameter of the first    │ continuously perform the operations until a second sampling stop condition is │
│ indirect lighting path sampled in the current round     │ satisfied, and take a second indirect lighting path selected in the final round as │
│ and a value range mapped by the path importance         │ the second candidate indirect lighting path │
│ parameter of the first indirect lighting path selected  └──────────────────────────────────────────────┘
│ in the last round, select a new first indirect lighting                        │
│ path from the first indirect lighting path sampled in                          ▼
│ the current round and the first indirect lighting path   ┌──────────────────────────────────────────────┐ 1030
│ selected in the last round according to the value range  │ Select a targeted indirect lighting path from a candidate path set; the first │
│ to which the first selected random number belongs, and   │ candidate indirect lighting path and the second candidate indirect lighting path │
│ take the new first indirect lighting path as the first   │ making up the candidate path set; and a probability of selection of each │
│ indirect lighting path selected in the current round     │ candidate indirect lighting path from the candidate path set being in positive │
└─────────────────────────────────────────┘               │ correlation with the lighting contribution value of the candidate indirect lighting │
                     │                                     │ path │
                     ▼                                     └──────────────────────────────────────────────┘
┌─────────────────────────────────────────┐ 1012                                │
│ Take a next round as a new current round, return to the                        ▼
│ operations of performing a current round of path         ┌──────────────────────────────────────────────┐ 1032
│ sampling on a pixel point, and acquiring a first         │ Eliminate a color intensity value from the lighting contribution value of the │
│ indirect lighting path sampled in the current round and  │ targeted indirect lighting path based on a path importance parameter of the │
│ continuously perform the operations until a first        │ targeted indirect lighting path, and acquire a color type value of the targeted │
│ sampling stop condition is satisfied, and take a first   │ indirect lighting path; the path importance parameter of the targeted indirect │
│ indirect lighting path selected in a final round as the  │ lighting path being configured for representing an intensity of a color in the │
│ first candidate indirect lighting path    │              │ lighting contribution value of the targeted indirect lighting path │
└─────────────────────────────────────────┘               └──────────────────────────────────────────────┘
                     │                                                           │
                     ▼                                                           ▼
┌─────────────────────────────────────────┐ 1014          ┌──────────────────────────────────────────────┐ 1034
│ Determine, for each pixel point in the virtual scene,    │ Assign the color type value of the targeted indirect lighting path to an average │
│ at least one initial neighborhood pixel point of the     │ path importance parameter of related lighting paths of the pixel point and │
│ pixel point from the virtual scene         │             │ acquire the comprehensive lighting contribution value corresponding to the │
└─────────────────────────────────────────┘               │ pixel point; the average path importance parameter being configured for │
                     │                                     │ representing an average intensity of colors in the lighting contribution values of │
                     ▼                                     │ the related indirect lighting paths The related indirect lighting path including the │
┌─────────────────────────────────────────┐ 1016          │ first indirect lighting path and the second indirect lighting path │
│ Take, for each initial neighborhood pixel point, the     └──────────────────────────────────────────────┘
│ initial neighborhood pixel point as the neighborhood                           │
│ pixel of the pixel point if no occlusion exists between                        ▼
│ the initial neighborhood pixel point and a bounce pixel  ┌──────────────────────────────────────────────┐ 1036
│ point; the bounce pixel point being a first bounce pixel │ Perform the lighting rendering on each pixel point in the virtual scene by │
│ point on the first indirect lighting path  │             │ using the comprehensive lighting contribution value of each pixel point │
└─────────────────────────────────────────┘               │ in the virtual scene │
                     │                                     └──────────────────────────────────────────────┘
                     ▼
┌─────────────────────────────────────────┐ 1018
│ Perform, for each neighborhood pixel point of the pixel │
│ point, a current round of path sampling on the           │
│ neighborhood pixel point, and acquire a second indirect │
│ lighting path sampled in the current round │
└─────────────────────────────────────────┘
```

## FIG. 10

```
┌─────────────────────────────────────────┐
│        Apparatus 1100 for lighting       │
│              rendering                   │
│                              ╭── 1102    │
│   ┌─────────────────────────────────┐    │
│   │                                 │    │
│   │        Selection module         │    │
│   │                                 │    │
│   └─────────────────────────────────┘    │
│                 │            ╭── 1104     │
│   ┌─────────────────────────────────┐    │
│   │                                 │    │
│   │        Rendering module         │    │
│   │                                 │    │
│   └─────────────────────────────────┘    │
└─────────────────────────────────────────┘
```

## FIG. 11

Memory

Operating system
Computer program
Database
Non-volatile storage medium

Processor

Internal memory

System bus

Input/output interface

Communication interface

Computer device

FIG. 12

Memory

Operating system
Computer program
Non-volatile storage medium

Processor

Internal memory

System bus

Input/output interface

Input apparatus

Communication interface

Display unit

Computer device

FIG. 13

## INTERNATIONAL SEARCH REPORT

| International application No. |
| --- |
| **PCT/CN2024/093754** |

**A. CLASSIFICATION OF SUBJECT MATTER**

G06T 15/00(2011.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 光照, 渲染, 虚拟, 场景, 像素点, 路径, 采样, 选取, 概率, 贡献值, 相关, 邻域, 目标, 综合, illumination, render, pixel, point, virtual, scene, path, contribution, positively, comprehensive, target

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116612225 A (TENCENT TECHNOLOGY (SHENZHEN) CO., LTD.) 18 August 2023 (2023-08-18)<br>claims 1-16 | 1-16 |
| A | CN 112840378 A (NVIDIA CORP.) 25 May 2021 (2021-05-25)<br>description, paragraphs [0021]-[0108] | 1-16 |
| A | CN 111354066 A (TENCENT TECHNOLOGY (SHENZHEN) CO., LTD.) 30 June 2020 (2020-06-30)<br>entire document | 1-16 |
| A | CN 115496845 A (BEIJING DAJIA INTERNET INFORMATION TECHNOLOGY CO., LTD.) 20 December 2022 (2022-12-20)<br>entire document | 1-16 |
| A | US 2017109898 A1 (CHAOS SOFTWARE LTD.) 20 April 2017 (2017-04-20)<br>entire document | 1-16 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 July 2024** | **05 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/093754**

| Patent document cited in search report | | | Publication date (day/month/year) | Patent family member(s) | | | Publication date (day/month/year) |
|---|---|---|---|---|---|---|---|
| CN | 116612225 | A | 18 August 2023 | None | | | |
| CN | 112840378 | A | 25 May 2021 | EP | 3827415 | A1 | 02 June 2021 |
| | | | | US | 2022165016 | A1 | 26 May 2022 |
| | | | | US | 11961176 | B2 | 16 April 2024 |
| | | | | US | 2020035014 | A1 | 30 January 2020 |
| | | | | US | 11244493 | B2 | 08 February 2022 |
| | | | | WO | 2020023880 | A1 | 30 January 2020 |
| CN | 111354066 | A | 30 June 2020 | None | | | |
| CN | 115496845 | A | 20 December 2022 | None | | | |
| US | 2017109898 | A1 | 20 April 2017 | US | 9679398 | B2 | 13 June 2017 |

Form PCT/ISA/210 (patent family annex) (July 2022)

**REFERENCES CITED IN THE DESCRIPTION**

**Patent documents cited in the description**

- CN 2023108802692